# EUROPÄISCHE PATENTSCHRIFT

(11) **EP 1 868 786 B1**
(45) Veröffentlichungstag und Bekanntmachung des Hinweises auf die Patenterteilung: **08.10.2008**
(21) Anmeldenummer: 06723603.4
(22) Anmeldetag: 21.03.2006
(51) Int. Cl.: B29B 17/00, B29B 17/02

(54) **VERFAHREN UND ANLAGE ZUR ZERKLEINERUNG UND REINIGUNG VON ABFALLKUNSTSTOFF**
METHOD AND SYSTEM FOR COMMINUTING AND CLEANING WASTE PLASTIC
PROCEDE ET DISPOSITIF POUR FRAGMENTER ET PURIFIER DES DECHETS DE MATIERE PLASTIQUE

(30) Priorität: 21.03.2005 DE 102005013693
(43) Veröffentlichungstag der Anmeldung: 26.12.2007
(73) Patentinhaber: CVP Clean Value Plastics GmbH, 21614 Buxtehude (DE)
(72) Erfinder: HOFMANN, Michael, 21614 Buxtehude (DE); FEDDERN, Alexander, 23843 Bad Oldesloe (DE); LÖFFLER, Jens-Martin, 21614 Buxtehude (DE)
(74) Vertreter: Graalfs, Edo
(86) Internationale Anmeldenummer: PCT/EP2006/002602
(87) Internationale Veröffentlichungsnummer: WO 2006/100044

(56) Entgegenhaltungen:
- EP-A- 1 518 652
- WO-A-20/05002817
- DE-A1- 10 330 756
- US-B1- 6 230 634
- DUBRULLE D'ORCHEL B: "MIXED PLASTICS RECYCLING" PE PLAST EUROPE, CARL HANSER, MUNCHEN, DE, Nr. 2, 1. Juni 1993 (1993-06-01), Seiten 171-173, XP000382014 ISSN: 0941-3596

## Beschreibung

Die Erfindung bezieht sich auf ein Verfahren zur Zerkleinerung und Reinigung von Abfallkunststoff. Die Erfindung bezieht sich auch auf die Bereitstellung des zerkleinerten und gereinigten Kunststoffs für verschiedene Anwendung in unterschiedlichen Sieblinien. Schließlich bezieht sich die Erfindung auch auf die Gewinnung von Kunststoff-Sorten aus zerkleinerten Mischkunststoffen.

Bei derzeit bestehenden Sammelsystemen für Abfallkunststoffe, z.B. Verpackungsmaterial aus Privathaushalten, Joghurtbecher, Schutzhüllen, Einkaufstüten, Flaschen für Reinigungsmittel, Zahnpastatuben usw. werden am Ende der Sortierkette Mischkunststoffe erhalten. Sie umfassen neben den üblichen Folien und Kunststoffen aus LDPE, HDPE, PS oder PP oft Folienreste aus LDPE/HDPE beschichtet mit Polyamiden bzw. PET-Folien (Verbundfolien), Polycarbonaten, PET, Polystyrol oder anderen Kunststoffen. Die quantitative Mengenverteilung der verschiedenen Kunststoffe, die Aufbereitungs- und Sortierbetrieben von Sammelunternehmen übergeben werden, hängt unter anderem vom Sammelverhalten und Qualitätsbewußtsein der Bevölkerung ab. Trotz fortgeschrittener Sortierung läßt sich eine vollständige Trennung der verschiedenen Kunststoffsorten nicht erreichen. Neben den Haushaltssammelsystemen existieren jedoch auch gewerbliche Sammelsysteme ausschließlich für LDPE- und HDPE-Kunststoffe, bei denen überwiegend Kunststoffolien, die über einen Folienkalander hergestellt werden, gesammelt werden. Auch hier fallen zunehmend Mischkunststoffe u.a. aus Verbundfolien an. Des Weiteren befinden sich große Mengen an Verpackungskunststoffen im normalen Hausmüll, v. a. im städtischen Bereich. Diese dort mit dem Hausmüll eingesammelten Mischkunststoffe werden derzeit in Testversuchen separiert, aber noch nicht systematisch aussortiert und einer Verwertung zugeführt.

Diese Mischkunststoffe (MKS) aus Sammelsystemen werden nach einer optionalen Reinigung und Vorsortierung zerkleinert zu Flakes oder Schnipseln, nachdem im Vorwege die sogenannte Flaschenfraktion (z.B. Waschmittelflaschen aus Polypropylen) aber auch großformatige Folienverpackungen aussortiert wurden. Die durchschnittliche "deutsche" Mischung aus dem Sammelsystem "gelber Sack" besteht zu 60-70 % aus Polyethylen, zu 5-10 % aus Polypropylen, zu 10-15 % aus Polystrol und zu 5-10 % aus anderen Kunststoffen. Die Anteile an PVC liegen unter 5 % mit fallender Tendenz.

Mischkunststoff besteht naturgemäß aus mehr als einer Kunststoffart, die nur mit hohem Aufwand oder überhaupt nicht wieder zu reinen Kunststoffen getrennt werden können. Mischkunststoffe sind nach dieser Definition also auch Verbundfolien, bei denen z. B. eine LDPE-Folie mit einer dünnen Polyamid- oder PET-Folie beschichtet ist. Mischkunststoffe entstehen derzeit überwiegend bei der Sammlung von Verpackungskunststoffen. Der überwiegende Teil an Mischkunststoffen sind Folienreste. Mischkunststoffe können jedoch auch Späne aus dickwandigen Behältern oder Verschlüssen aus Spritzgußteilen enthalten. Auch dickwandige Behälter können mit Schutzfolien oder ähnlichem kaschiert werden und damit zu Mischkunststoff werden.

Folienschnipsel lassen sich nicht oder nur unbefriedigend aufmahlen. Vielfach sind die Folien dünner als der Mahlspalt zwischen den Mahlscheiben etwa eines Refiners, sodass diese unzerfasert den Mahlvorgang passieren. Erst eine Kompaktierung der zweidimensionalen Schnipsel zu einem dreidimensionalen Agglomerat ermöglicht einen befriedigenden Mahlvorgang. Diese Kompaktierung findet optimal statt, indem die Folienreste durch Erwärmung zusammenknäueln und zumindest punktuell anschmelzen. Dieses kann zusammen mit Spänen aus dickwandige Kunststoffteilen und/oder zusammen mit anderem Span- oder Fasermaterial erfolgen, Eine bewährte Technologie ist dafür der sog. Topfagglomerator, der zur Erhöhung einer transportoptimalen Schüttrohdichte in Form eines körnigen Agglomerats führt. Es sind jedoch auch andere Methoden der Kompaktierung von Folienschnipseln zu Agglomerat denkbar. So führt z. B. eine gezielte Erwärmung, die nicht über den Schmelzpunkt der Trägerfolie hinausgeht, zu einem Schrumpfen der Flakes, die dabei alleine oder bewegt in einer Trommel oder in einem von Heißluft durchströmten Fallschacht zu Agglomerat kompaktieren.

Entscheidend für einen Aspekt der Erfindung ist, dass das erzeugte Agglomerat im Durchmesser nicht den Abstand der Mahlrippen der Mahlgarnitur eines Refiners überschreitet, da es sonst sofort zu Verstopfungen der Rippen-Zwischenräume kommt. Um ein Durchrutschen von kleinerem Material zwischen den Mahlrippen zu vermeiden, können erfindungsgemäß Barrieren zwischen den Rippen in Form von Querstegen eingebaut werden. An diesen Barrieren wird das Material beim Mahlvorgang zwangsweise in den Mahlspalt zwischen den Mahlscheiben geführt. Diese Barrieren werden sowohl bei Scheiben- wie auch bei Zylinder- oder Trommelrefinem an entsprechenden Stellen der Mahlgarnitur angeordnet. Im einfachsten Fall handelt es sich bei diesen Barrieren um Schweißpunkte, idealerweise werden Barrieren beim Fräsen der Mahlgarnituren aus dem vollen Material ausgeformt. Die Anordnung der Barrieren hängt von der Art des Refiner, dem Abstand der Mahlrippen und anderen Parametern ab. Die optimale Anordnung wird sehr einfach probeweise durch Setzen von Schweißpunkten ermittelt, die wieder entfernt werden können. Das dabei erzielte Mahlergebnis wird bewertet und auf der Basis die endgültige Anordnung der Barrieren festgelegt. Um eine ausreichende Transportschüttdichte zu erzielen, werden die Flakes oder Schnipsel bei der Erfindung zu einem körnigen Agglomerat kompaktiert. Das körnige Gut ist je nach Reinheit und Sortierung sehr gleichmäßig (bei hohem Reinhaltungsgrad der Kunststoffsorten), oder es hat eine sehr ungleichmäßige Struktur sowohl von der Erscheinung als auch von der Konsistenz und der Geometrie des Agglomerats her (hohe Durchmischung verschiedenster Kunststoffsorten von unterschiedlichen Herkunftsquellen, z.B. Mischkunststoffe aus Haushaltssammelsystemen). Bei der Aufbereitung, dem erwähnten Agglomerieren, werden die Flakes oder Schnipsel z. B. in einem Topfagglomerator mittels eines Rührwerkes durch Reibung so erwärmt, dass sie anschmelzen. Durch das in Intervallen durchgeführte Absprühen der erhitzten, angeschmolzenen Kunststoffmasse mit kaltem Wasser entweicht ein Teil der organischen Bestandteile über den Wasserdampf. Gleichzeitig kühlen die angeschmolzenen Folienstücke ab, werden von den Messerrotoren des Agglomerators zerschlagen und agglomerieren zu schüttfähigen, granulatartigen Gebilden. Dieses Agglomerat hat eine verhältnismäßig hohe Schüttdichte von ca. 250 bis 350 kg/m³ und ist sehr gut transportierbar. Dieses Verfahren ist in DE 198 01 286 C1 beschrieben. Es gibt jedoch auch sogenannte Scheibenagglomeratoren, die ähnliche Effekte bei der erforderlichen Kompaktierung des Materials erzielen. Andere Methoden der Kompaktierung wie Anschmelzen von Flakes in einem Heißluftstrom oder in einer beheizten Mischtrommel oder auch die Kompaktierung zu Pellets über Siebmatrizen sind möglich.

Im US-Patent 5,154,361 wird ein Verfahren beschrieben, in dem Folienflakes, insbesondere großformatige Folienreste zusammen mit Zellstoff in einem Refiner zerkleinert werden sollen, wobei zuvor eine Suspension gestellt wird, in der die Kunststoff-Folien z. B. aus Versandtaschen in einem Valley Beater vorzerkleinert werden. Diese Suspension wird anschließend mit Additiven und Antischäum Reagenzien behandelt, die eine Schaumbildung gelöster Klebstoffe verhindern sollen und in einem Scheibenrefiner in Anwesenheit von Zellstoff zerfasert. Es geht bei diesem Verfahren besonders um die in der Altpapieraufbereitung in großen Mengen anfallenden sogenannten Spukstoffe, also durch Kunststoffe verunreinigter Zellstoff aus Altpapier. Das bekannte Verfahren hat das Ziel, die Folien-Flakes durch Vorbehandlung so vorzuzerkleinern, dass diese zusammen mit Zellstoff eine Faserpulpe bilden. Diese wird dann so aufgemahlen, dass in dieser Pulpe Zellstoff und Kunststofffasern nahezu gleicher Größe enthalten sind. Kunststofffolien als Spukstoffe aus dem Altpapier sind immer mit weniger oder mehr Menge an Zellulosefasern behaftet. Daher nimmt die Recyclingbranche diese Stoffe ungern an, da diese sich auf Grund der Feuchtigkeit der Zellstofffasern z. B. nicht zufrieden stellend agglomerieren lassen. Trotz der hohen Reinheit der Folien machen die Zellstoffanhaftungen ein Einschmelzen zu Regranulat wirtschaftlich unmöglich. Ziel des bekannten Verfahrens ist es, mit diesem Fasermaterial aus Kunststoffen mit Beimengungen von Zellstoff Gipsplatten im Kern zu vergüten. Das Verfahren wird für sehr niedrige Stoffkonsistenzen beschrieben, wie man diese aus der Aufmahlung von Zellstoffpulpen kennt, nämlich maximal 4,25 %. Das Material wird nicht im Vorwege zu Agglomerat kompaktiert. Da Zellstoffe systematisch im Prozess vorgesehen sind, darf die Konsistenz für Zellstoffpulpen nicht überschritten werden.

Aus DE 103 30 756 und WO 2005/002817 ist ein Verfahren zur Herstellung eines Faserstoffes bekannt geworden, bei dem einer ersten Gruppe von Fasern eine zweite Gruppe zugemischt wird, die aus Kunststoffpartikeln oder -fasern besteht, welche durch Zerkleinern und/oder Zerfasern aus Agglomeraten aus Rein- oder Mischkunststoff in einem Scheibenrefiner gewonnen werden. Dem Scheibenrefiner wird währen des Zerkleinerungsvorgangs Wasser zugeführt. Die Teilchengröße der Kunststoffpartikel und/oder -fasern entspricht annähernd der Teilchengröße der Partikel oder Fasern der ersten Gruppe.

Das bekannte Verfahren dient vor allen Dingen der Herstellung von Formteilen aus Holzwerkstoffen, wobei ein Teil der Holzfasern durch Kunststoffpartikel und/oder - fasern substituiert wird. Hierbei, aber auch bei anderen Anwendungen, wird auf bestimmte Größen der Partikel oder Fasern Wert gelegt. Bei Scheibenrefinern kann es geschehen, dass trotz enger Spaltweite ein gewisser unerwünschter Anteil an relativ langen und großen Fasern oder grobkörnigen Spänen aus MKS erzeugt wird. Dies hat seine Ursache darin, dass bei einem Scheibenrefiner das Mahlgut durch die große Umdrehungszahl des Rotors einer starken Fliehkraft unterliegt und dadurch relativ groß bemessene Teilchen zwischen den Mahlscheiben in den Rippentälern der Mahlgarnitur nach außen durchrutschen können. Barrieren zwischen den Rippenstegen würden Verstopfungsrisiken mit sich bringen, da z.B. Holzhackschnitzel als zweite Stoffkomponente mit aufgemahlen werden. Es ist daher notwendig, einem derartigen Zerkleinerungsvorgang einen Sortier- oder Sichtungsprozess anzuschließen, über den die relativ großen Kunststofffasern ausgesondert werden. Des Weiteren geht das dort beschriebene Verfahren von einem mit atmosphärischem Druck oder unter Dampfdruck betriebenen Refiner aus, bei dem das Mahlgut über eine Förderschnecke (Stopfschnecke) dem Refiner zugeführt wird.

Der Erfindung liegt die Aufgabe zugrunde, ein Verfahren zur Zerkleinerung und Reinigung von Abfallkunststoff, insbesondere Mischkunststoff (MKS) anzugeben, mit dem eine Vielzahl von Wiederverwendungsmöglichkeiten des aufbereiteten Abfallkunststoffs erschlossen wird.

Diese Aufgabe wird durch den Patentanspruch 1 gelöst.

Erfindungswesentlich ist, dass bei dem erfindungsgemäßen Verfahren nach dem Zerkleinern des Abfallkunststoffs in agglomerierter bzw. kompaktierter Form in einem Scheiben- und Trommelrefiner eine Feinkornfraktion entfernt wird. Diese Feinkornfraktion hat gemäß einer Ausgestaltung der Erfindung eine durchschnittliche Korngröße von maximal 0,3 mm, vorzugsweise von maximal 0,25 mm. Im Refiner findet durch Waschen und Abrieb eine Reinigung des Kunststoffs statt, wobei etwa Glassplitter, gemahlener Zellstoff oder feinstes Aluminiumpulver die Verunreinigungsteilchen, die eine geringe Korngröße aufweisen, mit dem Prozesswasser abgeführt werden können. Noch verbleibende Verunreinigungen im Mahlgut können dann durch Waschen des übriggebliebenen Mahlguts weitgehend entfernt werden. Der beschriebene Verfahrensschritt hat außerdem den Vorteil, dass bestimmte störende Kunststoffsorten, insbesondere sehr harte Kunststoffe wie z.B. Hart-PVC, dazu neigen, sehr fein vermahlen zu werden. Dieses Mahlgut ist in der Regel wenig für eine Wiederverwendung geeignet. Das übrige Mahlgut enthält daher von vornherein bereits einen geringen Anteil von störenden Stoffen.

Bei einer Ausgestaltung der Erfindung erfolgt die Entfernung der Feinkornfraktion in einem Sieb oder einem Sorter.

Das Verfahren nach der Erfindung wird in der Praxis mit Stoffkonsistenzen von mindestens 10 % bis über 30 % betrieben werden. Der MKS wird im Vorwege zu Agglomerat kompaktiert und bildet keine Pulpe. Das Agglomerat kann in einem umgebenden wässrigen Medium gleichmäßig verteilt werden, bevor es in den Refiner eingetragen wird. Das Wasser wird als Transport-, Reinigungs- und Kühlmedium genutzt. Additive als Antischäummittel werden nicht benötigt.

Erst durch die Kompaktierung zum Agglomerat wird ein Mahlgut geschaffen, das Zugabe von Additiven und Agenzien im Vorwege beispielsweise zusammen mit Zellstoff in einem Refiner aufschließen lässt. Die Feststoffmenge für den Mahlprozess ermöglicht eine relativ große Stoffausbeute.

Bei der Erfindung ist es unerlässlich, eine Kompaktierung des Mischkunststoffes zu Agglomerat durchzuführen. Wird dieser Prozessschritt nicht durchgeführt, so werden einzelne Folientlakes ohne Zerkleinerung durch den Mahlspalt des Refiners durchgelassen, ohne zerfasert zu werden. Dabei spielt die Rohdichte des Agglomerats und auch die Beimischung von anderen Stoffen beim Agglomerieren keine große Rolle, da es lediglich darauf ankommt, dass durch die beim Agglomerieren durchgeführte Kompaktierung ein Mahlgut geschaffen wird, das als ganzes Teil im Mahlspalt des Refiners zerkleinerungsfähig wird. Beim Einsatz der nachfolgend beschriebenen Aufmahlung in sogenannten Niedrig-Konsistenz-Refinern kann kompaktiertes Agglomerat aus Mischkunststoffen in Korngrößen von 1 - 20 mm und in Trocken-Schütt-Rohdichten von 150 - 400 kg/m³ verarbeitet werden. In jedem Fall ist es für den Mahlerfolg wichtig, dass die Folienflakes durch Anschmelzung, Verknäuelung, Schrumpfung punktuell bis vollflächig miteinander verbunden sind und so ein kompaktiertes Mahlgut, das erwähnte Agglomerat ergeben.

Beim erfindungsgemäßen Verfahren kann das Agglomerat vollständig im wässrigen Medium in einem Niedrig-Konsistenz-Refiner eingesetzt werden. Dieser kann ein Scheibenrefiner sein, oder auch ein Trommel- oder Zylinderrefiner. Die Niedrig-Konsistenz-Refiner unterscheiden sich von den in DE 103 30 756 beschriebenen Scheibenrefinern erheblich. Diese Refiner werden zum Aufmahlen von schon vorgemahlenen Faserstoffen in einer wässrigen Suspension niedriger Konsistenz verwendet. Bekannt ist der Einsatz dieser Niedrig-Konsistenz-Refiner in der Pulpe, aufgelöst und so lange gemahlen wird, bis die gewünschte Faserqualität erreicht wird. Diese Refiner bedürfen einer sehr niedrigen Konsistenz der Suspension, um technisch einwandfreie Ergebnisse beim Mahlen zu erbringen und können in ihrem Einsatzgebiet lediglich Feststoffkonsistenzen (Feststoffanteile) von ca. 4-6 % aufmahlen. Die Ausprägung als Trommel-Refiner ist grundsätzlich bekannt, z.B. aus AT 408768 B oder AT 408769 B. Ein Trommelrefiner hat einen längszylindrischen oder ringkonischen Mahlspalt, dessen Weite durch unterschiedliche Mittel eingestellt werden kann. Derartige Trommelrefiner werden ebenfalls in der Papierindustrie eingesetzt zwecks Zerkleinerung von Zellstoffasern in der breiartigen Pulpe. Gegenüber den Niedrig-Konsistenz-Scheibenrefinern liefern Niedrig-Konsistenz-Trommelrefiner eine noch bessere Mahlung der Zellstofffasern v. a. für Feinpapiere wie Zigarettenpapier oder Inkjet- oder Fotopapiere.

Bei dem erfindungsgemäßen Verfahren wird ein Niedrig-Konsistenz-Refiner als Scheiben- oder Trommelrefiner zur Zerkleinerung von agglomeriertem Mischkunststoff eingesetzt. Es hat sich überraschend gezeigt, dass das im Vergleich zu der sehr feinen Zellstofffaser grobe Agglomerat aus Mischkunststoff sich sehr gut auf die gewünschten Korn- und Fasergrößen zerkleinern lässt. Gegenüber dem Scheibenrefiner hat der Trommelrefiner den Vorteil, dass durch Wegfall von Zentrifugalkräften und ungleichen Umfangsgeschwindigkeit, wie sie beim Scheibenrefiner auftreten, eine relativ gleichmäßige Zermahlung des Agglomerats erzielt wird. Der Mahlprozess ist daher u.U. besser kontrollierbar als bei einem Scheibenrefiner und liefert ein Mahlgut mit einer geringeren Spreizung der Siebkennlinie des Mahlguts (geringe Unterschiede in der Korngröße bzw. gleichmäßige Verteilung der Komgrößen). Ein Refiner kann nach einer Ausgestaltung der Erfindung aus mehreren Stufen aufgebaut sein, wobei fortschreitend jede folgende Stufe einen kleineren Mahlspalt als die voraufgehende aufweist.

Nach einer Ausgestaltung der Erfindung wird der agglomerierte Kunststoff zusammen mit dem Wasser in hoher Konsistenz unter Druck in den für niedrige Konsistenzen vorgesehenen Refiner eingetragen. Vorzugsweise erfolgt der Mahlprozess im Kreislauf, indem das Mahlgut abgeschieden wird und das Prozesswasser im Kreislauf in den Prozess zurückgeleitet wird. Dabei kann das Mahlgut vollständig für weitere getrennte Verarbeitungsschritte abgeschieden werden oder teilweise oder ganz zusammen mit dem Prozesswasser zur wiederholten Mahlung durch den gleichen Refiner oder einem weiteren Refiner geschickt werden. Auf diese Weise kann eine kontrollierte Zerkleinerung erhalten werden bei Einsatz einer Minimalmenge an Prozesswasser. Das Prozesswasser kann einer Klärung unterworfen werden, bevor es in den Prozess zurückgeleitet oder vollständig aus dem Kreislauf entfernt wird. Der Kreisprozess sorgt dafür, dass nur eine sehr geringe Menge von Prozesswasser für das erfindungsgemäße Verfahren erforderlich ist, insbesondere wenn der Anteil an Agglomerat hoch ist.

Der Einsatz eines bereits beschriebenen Scheibenrefiners zur Zerkleinerung von Agglomerat in kontrollierter Weise kann erfindungsgemäß auch dergestalt erfolgen, dass der agglomerierte Mischkunststoff zusammen mit Wasser in einen Refiner eingetragen wird, wobei der Anteil an Wasser größer ist als der von Mischkunststoff Das Mahlgut mit dem Prozesswasser kann mindestens einmal im Kreislauf zurück in den Scheibenrefiner eingetragen werden. Ein derartiges Verfahren ist in der Papierindustrie für das Aufmahlen von Pulpe an sich bekannt geworden, aber für das Zerkleinern von Kunststoff bzw. von agglomeriertem Kunststoff bisher nicht verwendet worden. Das erfindungsgemäße Verfahren hat Wasser deutlich höher liegen kann als bei dem Verfahren in der Papierindustrie, beispielsweise mindestens 10 % und mehr.

Nach einer Ausgestaltung der Erfindung ist auch möglich, das Mahlgut vor dem Entfernen der Feinkornfraktion mit dem Prozesswasser ein- oder mehrfach im Kreislauf zurückzuleiten, was zu einer Verbesserung der Zerkleinerung und der Reinigungswirkung führt. Das Brauchwasser kann nach einer Ausgestaltung der Erfindung aus den einzelnen Prozeßstufen nach dem Mahlvorgang in eine in Förderrichtung davor angeordnete Prozeßstufe zurück geleitet werden.

Das erfindungsgemäße Verfahren kann auch einen Sichtungsprozess einschließen, indem das übrige Mahlgut (ohne Feinkornfraktion) in ein Sinksichtungsgefäß eingetragen wird. Dadurch lassen sich verschiedene Kunststoffgruppen und abgetrennte organische und anorganische Stoffe trennen. Naturgemäß schwimmen alle gemahlenen Kunststoffe mit einer Rohdichte < 1,0 kg/m³ auf, während die übrigen mit einer Rohdichte > 1,0 kg/m³ absinken. Dadurch ergibt sich, dass Polyethylene und Polypropylene (außer sie sind mit Füllstoffen vermischt) aufschwimmen, während Polystyrole, PET, Polyamide und PVC absinken. Ebenfalls sinken anorganische Stoffe aus Druck, Farben oder Füllstoffen mit einer Rohdichte > 1,0 ab.

Das zuletzt beschriebene Verfahren hat ferner den Vorteil, dass wasserlösliche bzw. wasserunlösliche Störstoffe (organische Stoffe, Füllstoffe, Glassplitter usw.) durch das Prozesswasser ausgewaschen und aufgenommen werden. Diese Auswaschung führt dazu, dass das Mahlgut eine gute Rieselfähigkeit erhält, wodurch es in Streumaschinen, wie man sie in der PVC-Verarbeitung und zur Herstellung von PVC-Böden verwendet, eingesetzt werden kann, beispielsweise bei der Herstellung Agglomerat kann auch unter Beifügung von Span- oder Fasergut, z.B. aus Holzspänen oder Holzfasern beim Agglomerieren der Mischkunststoffe erfolgen.

Eine Verringerung der Spreizung der Häufigkeitsverteilung der Siebanteile bei der Mahlung kann folgendermaßen erreicht werden:

Es werden zwei Refiner oder auch mehrere Refiner in Serie hintereinander geschaltet, wobei der erste Refiner das Agglomerat vormahlt und die weiteren jeweils die größeren Partikel der vorangegangenen Mahlung nachmahlen. Das Ergebnis ist eine sehr gleichmäßige Mahlung. Diese Methode liefert eine hohe Kapazität und ist weniger aufwendig, als das Mahlgut vollständig oder abgesiebt in Teilfraktionen wieder erneut durchzumahlen. Bei Mischkunststoffen zeigt sich ein in hohem Maße reproduzierbares Mahlergebnis, auch wenn das Agglomerat selbst inhomogen ist. Der zweite Grund liegt darin, dass der Abstand der Mahlrippen in den Mahlplatten oder Trommel des Refiners so gestaltet ist, dass der Abstand der Rippen jeweils größer ist, als die größten Durchmesser der Körner des zu mahlenden Agglomerats. Werden die Mahlscheiben mit den bei Zellstoffmahlungen üblichen engeren Rippenabständen gewählt, verkeilen sich einzelne Agglomeratpartikel nach kurzer Zeit zwischen den Rippen, was zu einer Behinderung der gleichmäßigen Mahlung führt. Mit dem vorzerkleinerten Mahlgut aus der ersten Mahlung kann der Abstand der Rippen der Mahlscheiben des in Serie nachgeschalteten Refiners enger werden, was zu einer Verbesserung des Massendurchsatzes führt. Auch hier muß beachtet werden, dass der Abstand der Rippen dem Mahlgut angepaßt wird, d.h. keine Körner hat mit einem Durchmesser größer als der Rippenabstand, sodass es nicht zu Behinderungen der Mahlung durch Verstopfen der Rippenzwischenräume kommt. Bei der bekannten Mahlung von Zellstoff in Niedrigkonsistenzrefinern hat der Abstand der Rippen der Mahlscheiben Einfluß auf die Leistungsaufnahme des

Refiners und den auf die Maschine abzustimmenden Mengendurchsatz: Je enger die Rippenabstände, umso höher wird der Mengendurchsatz.

Die radiale Ausrichtung der Fräsrippen wirkt sich naturgemäß auf den Mengendurchsatz und den Energieverbrauch des Refiners aus. Neben der strengen radialen Ausrichtung der Rippen bei einem Scheibenrefiner sind geneigte und bogenförmige Anordnungen der Rippen möglich. Analog verhält es sich bei einem Trommel-Refiner, bei dem die rechtwinklige Ausrichtung der Mahlrippen zur Tangente am Mahlzylinder die Entsprechung zur radialen Ausrichtung beim Scheibenrefiner ist. Bei einer Biegung in Laufrichtung, ähnlich dem Strömungsprofil einer Flugzeugtragfläche, erzeugen die Mahlrippen durch Druckaufbau im Wasser eine Pumpwirkung, die den Stoffdurchsatz unterstützt. Im sogenannten Backhold-Betrieb wird die Pumpwirkung durch Umkehrung der Laufrichtung des Refiners umgekehrt. Somit entsteht ein Druckgefälle zur Drehachse des Refiners, der für eine längere Verweilzeit des Mahlguts in der Mahlzone sorgt. Diese Maßnahme zeigt bei Mischkunststoffen eine spürbare Auswirkung auf eine Vergleichmäßigung des Mahlergebnisses, ist jedoch mit einer beträchtlichen Erhöhung der Leistungsaufnahme und des Verbrauchs an elektrischer Energie verbunden. Die Kapazität der Maschine sinkt, sodass im Sinne einer Beibehaltung einer angemessenen Kapazität in jedem Fall bei Mischkunststoffen die oben beschriebene Methode vorzuziehen ist. Dennoch ist in den Fällen, wo ein besonders feines und gleichmäßiges Mahlergebnis erwünscht ist, der Backhold-Betrieb auch bei einem der beiden in Serie geschalteten Refiner eine Methode zur Erzielung besonders gleichmäßiger Mahlergebnisse. Diese Methode setzt jedoch voraus, dass die Rippen der Mahlscheiben von der strengen radialen Richtung abweichen und geneigt oder bogenförmig angeordnet werden.

Die Serienschaltung von zwei oder mehreren Refinern ist also eine sehr gute Methode zum Zerkleinern von Mischkunststoffen, wenn bei hohem Leistungsdurchsatz eine Sieblinie mit enger Spreizung erzielt oder wenn eine Stofffraktionierung nach Korn- bzw. Fasergröße durchgeführt werden soll.

Reicht das Ergebnis an den gemahlenen Mischkunststoff noch nicht aus, kann das Mahlgut nach Fraktionen gesiebt oder abgefiltert werden. Der bisher übliche Weg ist ein Absieben des trockenen Mahlguts. Erstaunlicherweise ergibt die Anwendung von Inline-Siebvorrichtungen (Sorter) bemerkenswerte Ergebnisse.

Sollen aus einer Mahlung bestimmte größere Siebanteile herausgefiltert werden, so kann dieses nach einer Ausgestaltung der Erfindung äußerst effizient schon im Nassprozess direkt nach der ersten Mahlung und/oder nach der zweiten Mahlung geschehen, indem eine Inline-Siebung, z.B. ein sogenannter Sorter unmittelbar hinter dem Refiner in Serie geschaltet wird. Bei dem Sorter handelt es sich um ein zylindrisches Gefäß mit einem Einlauf- und einem Auslaufventil. Der Zylinder ist mit Löchern oder Schlitzen perforiert, die auf die Größe des zu siebenden Produkts (Rejekt oder Akzept) abgestimmt sind. Ein innenliegender Rotor treibt mit tangential angeordneten Schaufeln das Sortiergut an der Innenleibung des Lochzylinders vorbei. Mahlgut, das feiner ist als der Lochdurchmesser, wandert durch und wird separiert. Das zurückgehaltene Gut verläßt auf einem getrennten Weg den Zylinder. Bei der Anwendung dieser Technik mit Mischkunststoffen erhält man ein bemerkenswertes Ergebnis: Es gelingt z.B. bei einem Lochdurchmesser von 1 mm die Abfiltrierung von feinsten Mischkunststofffasern aus der Feinfraktion. Diese Feinanteile können als polymerer Zuschlagstoff, z.B. zur Vergütung von flexiblen Fliesenklebern oder ähnlichen Anwendungen dienen. Das in diesem Fall als Akzept zu bezeichnende Siebgut hat die Konsistenz eines Schlamms, zeichnet sich durch behandeln. Bemerkenswert ist, dass trotz des Lochdurchmessers von 1 mm nur deutlich feinere Anteile an Mischkunststoffen das Sieb passieren. Bei größeren Lochdurchmesser verschiebt sich die Größenordnung des passierenden Gutes entsprechend, zeigt jedoch ähnlich Effekte. Umgekehrt führt die Absiebung mit dem Sorter bei dem verbleibenden Gut zu einer Verringerung der Spreizung der Siebkurve.

Bei der Mahlung von Mischkunststoffen in Niedrigkonsistenzrefinern besteht neben der Entfernung von Feinstanteilen der Vorteil der effizienten Inline-Absiebung von verschiedenen Mischkunststofffraktionen. Die Stofftrennung des Mahlguts kann mit der oben beschriebenen Methode wirtschaftlich und vor allem ohne Störungen im Prozeß der Mahlung selbst durchgeführt werden, da das Mahlgut nicht aus seinem wässrigen Medium herausgetrennt werden muß. Das Abscheiden der Fein- bzw. Feinstanteile verhindert ihre Emission über die Abluft und damit die Installation von teuren Staubfiltern, wenn konventionell in Durchströmungstrocknern, Stromtrocknern und nicht mit Heißdampf getrocknet wird

Bei der Kompaktierung von Flakes aus Abfallkunststoffen werden Verunreinigungen im Agglomerat eingeschlossen: Organische Reststoffe, Calcium und Magnesium (aus Füllstoffen wie Talkum) oder Chloride (Kochsalz) haften an den Flakes und werden im Agglomerierprozeß teilweise umhüllt zwischen den einzelnen Folienlagen des kompaktierten Materials. Aus diesem Grund konnte bei der Verwendung von Agglomerat aus Mischkunststoffen aus Sammelsystemen in der Vergangenheit die Geruchsbelästigung nicht unterbunden werden. Besonders kritisch wird bei Mischkunststoffen der Chloridanteil gesehen. Chloride führen in den Anlagen zu erhöhter Korrosion bei Standardmetallen (kein Edelstahl) und können in der Verbrennung oder beim Einsatz als Kohlenstoffträger im Reduktionsprozeß bei der Herstellung von Stahl zur Bildung von unerwünschten oder sogar über Bildung von Dioxinen zu kritischen Emissionen führen.

Die Aufmahlung in Niedrigkonsistenz-Refineranordnung führt durch den Aufschluß von Agglomerat automatisch zu einer effizienten Reinigung. So wurde z.B. der Anteil an Chloriden von über 0,9 % beim Ausgangsmaterial (Mischkunststoff Agglomerat) auf unter 0,4 %, also um mehr als die Hälfte, gesenkt. Damit wird es möglich, das nach dem beschriebenen Verfahren aufgemahlene Mischkunststoff-Material besser als Brennstoff oder Rohstoff einzusetzen, da zu erwartende Emissionen drastisch reduziert werden.

Organische Verschmutzungen, wie diese bei Lebensmittelverpackungen, z.B. durch nicht vollständig entleerte Joghurt Becher leicht auftreten oder Anhaftungen an Kunststoffabfällen, die aus Hausmüll heraussondiert werden, lösen sich nicht oder nur teilweise im Prozesswasser. Vielmehr bilden sich Suspensionen, in denen die organischen Teile als feine oder faserige Stoffteilchen schweben. Diese lassen sich bei Verwendung entsprechender Filter abfiltern. Gelöste Stoffe, z. B. emulgierte Lebensmittelszusätze können durch Zugabe entsprechender Fällungsmittel ausgefällt und abfiltriert werden.

Da die Aufmahlung der Mischkunststoffe nach der Erfindung bei Konsistenzen bis über 30 % stattfinden kann, sind der Wasserverbrauch und damit die Wasserverschmutzung vergleichsweise gering. So ergab eine chemische Analytik des Prozeßwassers bei einer 30 %igen Konsistenz an Mischkunststoffen einen im Wasser gelösten Chloridanteil im Abwasser von 0,6 %, und einen ph-Wert von 5,5. Der Glührückstand, ein Indikator für nicht anorganische Bestandteile, ergab Werte unter 3,5 % für das aufgemahlene Agglomerat. Damit liegt man erheblich unter den Die anorganischen Bestandteile finden sich im Prozeßwasser in Form von Calcium, Magnesium, Sulfaten und Siliziumverbindungen wieder. Der pH-Wert von 5,5 des Prozeßwassers ist ein Indikator für die hohe Reinigungswirkung des erfindungsgemäß beschriebenen Verfahrens. Der zerfaserte Mischkunststoff bewirkt selbst nach mehrtägiger Lagerung in gereinigtem Wasser keinerlei Veränderung des pH-Wertes mehr. Mischkunststoff-Agglomerat hingegen führt zu einer zunehmenden Absenkung des pH-Wertes bei Lagerung im Wasser oder einem wassergesättigten Medium. Je nachdem wie Verschmutzungen im Agglomerat eingeschlossen werden, kann es teilweise sehr lange - bis über ein Jahr und mehrdauern, bis es zu keiner Veränderung des pH-Wertes mehr kommt.

Bei dem erfindungsgemäßen Verfahren kann der einzusetzende Rohstoff aus Abfallkunststoff Agglomerat sehr stark verunreinigt sein. Selbst größere Glassplitter passieren den Mahlvorgang und werden ohne Beschädigung der Mahlscheiben zu feinem Staub auf gemahlen. Splitter lassen sich abfiltern oder setzen sich in der Reinigungsbütte auf Grund der hohen Dichte ab. Selbst hohe Verunreinigungen aus organischen Reststoffen werden verläßlich im Prozeßwasser aufgenommen und lassen sich über Sorter und Siebe als Schwebteilchen absieben. Aluminiumreste passieren ebenfalls ohne Störungen des Prozesses den Mahlvorgang. Lediglich härtere Metalle, insbesondere Stahl- und Eisenteile, müssen zuverlässig vor der Agglomeratbildung abgeschieden werden, da diese zu einer Beschädigung der Mahlscheiben führen können.

Die bisher bei vielen der Sortierprozesse der Entsorgungswirtschaft durchgeführten Reinigungsschritte und Sortierstufen können bei Verwendung des erfindungsgemäßen Verfahrens entfallen. Da die Sortierkosten eine hohe werkstoffliche Verwertung bedeuten, wird durch das beschriebene Verfahren ein hoher wirtschaftlicher Nutzen für die Verwertung von Mischkunststoffen generiert. Es ist lediglich erforderlich, Folien zu Schnipseln oder Flakes und dickwandige Teile aus Flaschenresten oder Verschlüssen zu Spänen zu zerkleinern und diese zu Agglomerat zu kompaktieren. Selbst eine Vorreinigung durch das Schocken mit Wasser im Topfagglomerator ist entbehrlich, sodass auch andere Technologien zur Kompaktierung zu Agglomerat zum Einsatz kommen können. Die Reinigungswirkung durch das Schocken ist begrenzt und führt nicht zu einer vollständigen Reinigung. Jedoch ist ein hoher Reinigungsaufwand des Wasserdampfs bei diesem Prozess erforderlich. Da die Reinigung vollständig auch bei starken Verunreinigungen in unserem Prozess durchgeführt werden kann, ergeben sich durch die Installation einfacherer Kompaktierprozesse selbst bei stark verschmutztem Agglomerat hohe Einsparungspotenziale.

Ein aufwendiger Klärungsprozeß wird durch eine Filtration mit Inline-Siebung, z.B. dem Sorter, entbehrlich. Die Sorter-Technik ermöglicht selbst am Schluß der Prozeßkette noch die Abfiltration von Schwebeteilchen, welche die Verunreinigung vorwiegend verkörpern.

Die Versuche haben gezeigt, dass es nach dem Durchlaufen des Mahlprozesses vorteilhaft ist, das Prozeßwasser mit der Feinkornfraktion vom übrigen Mahlgut z.B. in einem Bogensieb abzuscheiden und das Mahlgut in einer Frischwasser-Bütte aufzufangen und vor dem Stoffaustrag mit einem Agitator zu bewegen. Dabei kommt es zu einer Verdünnung des noch am Fasermaterial anhaftenden verunreinigten Prozeßwassers. Hierzu ein Rechenbeispiel:

Es werden 300 kg Mischkunststoff Agglomerat in 700 kg Prozeßwasser verunreinigtes Prozeßwasser als Oberflächenwasser am Mahlgut. Diese Gesamtmenge von 400 kg wird wieder in 600 kg sauberes Wasser eingeleitet, davon 100 kg Prozeßwasser. Die Verdünnung beläuft sich also auf 100 kg/600 kg, also ca. 16 %. Nach dem Abscheiden des Mahlgutes aus der abschließenden Reinigung verläßt das Mahlgut den Prozeß nach einem Durchlauf durch eine Trockenquetsch-Schnecke mit einer Restfeuchte von ca. 30 %. Das sind 90 kg Wasser von 600 kg. Die verbleibenden 510 kg mit geringer Verunreinigung werden als Auffüllwasser wieder der Materialeintragsbütte zugeführt. Dieser Wasserkreislauf wird durch Filtration mit dem Sorter permanent von Schwebeteilchen gereinigt. Sollte es zu einer zu starken Absenkung des pH-Wertes unter 5,5 kommen, wird eine Korrektur des pH-Wertes z.B. durch Zuführung geeigneter Laugen durchgerührt. Es kommt durch diesen Prozeß praktisch nur zu einem Wasserverbrauch aus dem Nachfüllen des mit dem fertigen Mahlgut abgängigen Oberflächenwassers aus der Reinigung und prozessüblichen Leckageverlusten. Denn nach der Vortrocknung und Filtration wird das Prozeßwasser in das Reservoir für Agglomerat und Wasser rückgeführt.

Das Mahlgut kann nach der Reinigung vorgetrocknet werden, vorzugsweise mechanisch, z.B. mittels einer Schnecke. Mechanische Entwässerungsmethoden wie die Entwässerung mit der Schnecke liefern ein Mahlgut mit Feuchtigkeiten von ca. 30 %. Das Mahlgut ist selbst im nassen Zustand noch rieselfähig. Die Schnecke verstopft nicht und hat einen um mindestens 50 % höheren Durchsatz als die mechanische Vortrocknung von Zellstoff. Das Mahlgut trocknet bei einer Raumtemperatur von ca. 20° C und einer Schütthöhe von ca. 1 cm innerhalb eines Zeitraums von ca. 4 Std. ohne weitere Maßnahmen. Der Energiebedarf zur Trocknung des Mahlguts liegt z.B. bei ¼ des Energiebedarfs von Holzfasern. Damit werden aufwendige Trocknungsverfahren wie die Dampftrocknung entbehrlich oder auf einen minimalen Energiebedarf reduziert.

Die mechanische Verdichtung des gemahlenen Mischkunststoffs führt bei weitestgehender Erhaltung der Rieselfähigkeit zu einer hochgradigen Entwässerung.

Die Rohdichte des Agglomerats ist für den Prozess von untergeordneter Bedeutung. Die Herstellung von Agglomerat höherer Rohdichte bis zu einer Schüttdichte von 350 kg verringert zwar die Transportkosten, führt jedoch gleichzeitig zu höheren Energiekosten und zu einer Verringerung der Kapazität beim Agglomerieren. Die Herstellung der geeigneten Rohdichte muß wirtschaftlich abgewogen werden. So wird derjenige Betreiber einer Anlage zur Zerkleinerung mit geringen Rohdichten beim Agglomerat arbeiten, wenn dieser die Agglomeratbildung selbst in der Prozeßkette durchführt. Beim Zukauf von Agglomerat werden die Logistikkosten eine größere Rolle v.a. bei größeren Transportentfernungen spielen. Für den Prozeß selbst spielt die Schüttdichte innerhalb von Grenzen zwischen 150 und 450 kg/m³ keine wesentliche Rolle, da mit nahezu gleichbleibender Konsistenz im Prozeß gefahren werden kann. Höhere Rohdichten führen jedoch zu einem größeren Energiebedarf bei der Zerkleinerung. Kommen die höheren Rohdichten des Agglomerats aus einem höheren Anteil von Spänen aus dickwandigen Kunststoffresten und weniger aus zerknäulten Folienflakes, so ergibt sich ein mehr körniges Mahlgut. Umgekehrt ergibt sich bei Verwendung von Folienresten ein mehr faseriges Mahlgut. Bemerkenswert ist es, dass sich mit den bisher beschriebenen Verfahren zur Aufmahlung in atmosphärischen oder Druck-Refinern Agglomerat aus reinen Folien nicht aufmahlen lässt, weil es in kurzer Zeit zu Anschmelzungen an den Refinerscheiben kommt. Das beschriebene Verfahren erlaubt auch die Mahlung von Agglomerat von reinen Folienresten. Sogar die Beimischung von sogenannten Stretchfolien, die bisher in Mengenanteilen über 30 % als nicht mahlbar galten, werden mit dem erfindungsgemäßen Verfahren mahlbar, wenn diese in Mengen von über 30 % dem Agglomerat beigefügt werden.

Nach einer weiteren Ausgestaltung des erfindungsgemäßen Verfahrens kann ein Anteil des Mahlguts in einem vorgegebenen Korngrößenbereich als zweite Stoffkomponente mindestens einer ersten Stoffkomponente zugemischt und der Korngrößenbereich so gewählt werden, dass die physikalischen Eigenschaften der ersten Stoffkomponente verändert und/oder Anteile der ersten Stoffkomponente substituiert werden. Die erste Stoffkomponente kann von Holzfasern für eine Holzfaserplatte (MDF, HDF) mittlerer oder hoher Dichte oder eine Holzspanplatte aufweise, während die zweite Stoffkomponente als Bindemittel und/oder Holzersatz Faserform hat und im Korngrößenbereich von < 0,63 mm liegt.

Durch den erfindungsgemäßen Mahlprozeß wird das Agglomerat aus Mischkunststoff zerkleinert, wobei verschiedene Korngrößen anfallen. Die Korngrößen können über eine übliche Siebung nach einer vorgegebenen Sieblinie getrennt werden. Die Sieblinie weist je nach dem verwendeten Mahlprinzip unterschiedliche Charakteristika auf. Bei zum Beispiel einem einmaligen Durchlauf von Agglomerat durch einen Scheibenrefiner mit einem Mahlspalt von 0,1 mm ergibt sich folgende Korngrößenverteilung:

| | |
|---|---|
| Korngröße > 5,00 mm | Anteil 0,6S M-% |
| Korngröße > 3,15 mm | Anteil: 6,56 M-% |
| Korngröße > 1,25 mm | Anteil: 55,11 M-% |
| Korngröße > 0,63 mm | Anteil: 26,50 M-% |
| Korngröße > 0,40 mm | Anteil: 5,53 M-% |
| Korngröße > 0,16 mm | Anteil: 3,70 M-% |
| Korngröße < 0,16 mm | Anteil: 1,91 M-%, |

wobei M-% Masse-Prozent bedeutet.

Nach dem Aufmahlen ist festzustellen, dass die einzelnen gesiebten Korngrößenanteile nicht mehr aus den gleichen Anteilen der Kunststoffsorten wie der Ausgangsstoff agglomerierter Mischkunststoffe bestehen. Während das Agglomerat als einigermaßen homogene Masse vorwiegend aus PET, PS, LDPE, HDPE und PP besteht, werden die einzelnen Fraktionen durch das Mahlen weitestgehend in kombinierte Teilfraktionen separiert. So findet im oben beschriebenen Beispiel im Feinkornanteil < 0,40 mm ein großer an PP und PET und ein geringer Anteil an LDPE. HDPE ist auch nur in kleineren Anteilen zu finden. Dies resultiert aus der Härte und Sprödigkeit der verschiedenen Kunststoffsorten. Dickwandiges PP und PET sind z.B. härter als LDPE und läßt sich demzufolge besser fein aufmahlen, während LDPE faseriges Mahlgut ergibt, das hier beispielhaft eher in der Fraktion von 1,25 mm bis 3,15 mm zu finden ist. HDPE und PP-Folien sind härter und von unterschiedlicher Zähigkeit. Beim Mahlen ergeben sich daher zum Teil eine rundliche Körnung und zum Teil Fasern, die sehr stark in der Fraktion von 0,63 bis 1,25 mm zu finden sind.

In dem oben angegebenen Beispiel findet sich auch die Fraktion > 5,00 mm aus HDPE- und PP-Flakes. Hierbei wird entsprechendes Folienmaterial z.B. durch die Scheiben eines Refiners nur geringfügig zerkleinert, auch wenn, wie im obigen Beispiel angegeben, der Scheibenabstand nur 0,1 mm beträgt. Es können je nach Siebung auch LDPE-Fasern enthalten sein, die sich auf Grund ihrer faserigen Struktur zu Konglomeraten lose zusammengeballt haben und somit größer 5,00 mm sind.

Die sich durch das Mahlen von Agglomerat aus Mischkunststoff ergebenden Fraktionen erscheinen zwar nicht sortenrein, es ergibt sich aber ein hoher Anteil spezifischer Kunststoffsorten für bestimmte Korngrößen. Somit läßt sich durch Kunststoffsorten vornehmen. So enthält z.B. ein Feinkomanteil < 0,40 mm einen großen Anteil an vormals dickwandigem PP und PET und einen sehr geringen Anteil an LDPE. Vormals dickwandiges HDPE ist auch nur in kleineren Anteilen zu finden. Dies resultiert aus der Härte und Sprödigkeit der unterschiedlichen Kunststoffe. LDPE ergibt faseriges Mahlgut vorzugsweise im Bereich von 1,25 bis 3,15 mm. HDPE und PP sind härter und ist im Wesentlichen im Größenbereich von 0,63 bis 1,25 mm zu finden.

Nach einer Ausgestaltung der Erfindung wird das Mahlgut im Korngrößenbereich < 0,63 mm mit Holzfasern oder Holzspänen von Holzfaserplatten und Holzspanplatten gemischt, wobei die faserigen Kunststoffpartikel als Bindemittel und/oder Holzersatz dienen. Durch Verwendung eines Agglomerats aus aussortierten Folien aus LDPE und HDPE ergibt sich ein höherer Faseranteil über 0,63 mm als reiner Mischkunststoff mit Anteilen aus LDPE-Verbundfolien mit PET und/oder PA.

Bei einer Holzspanplatte wird eine Substitution von Holzfasern vorzugsweise von Kunststofffasern im Größenbereich von 1,25 bis 3,15 vorgenommen.

Zur Herstellung von hochverdichteten MDF-Platten, sogenannten HDF-Platten, für Laminatböden wird vorzugsweise ein hoher Faseranteil von < 0,63 mm verwendet, um eine homogene Plattenstruktur mit hoher Querzugfestigkeit und hoher Feuchtebeständigkeit zu erzielen. Dies kann auf mehrfache Weise erreicht werden, indem
1. in der Vorsortierung des Mischkunststoffs der Anteil fein aufmahlender Kunststoffe wie z.B. PET und/oder dickwandiges PP und/oder LDPE-Verbundfolien mit PA und/oder PET erhöht wird;
2. die Anzahl der Mahldurchläufe erhöht wird, um einen größeren Anteil LDPE zu erhalten;
3. durch längere Verweilzeit im Agglomerator ein Agglomerat mit Rohdichten bis 350 kg/m³ erzeugt wird, das durch bessere Verklebung der Folienflakes zu feineren Fasern zermahlen wird;
4. beim Agglomerieren zerkleinerte LDPE- oder HDPE-Späne aus Spritzgußteilen, wie z.B. Flaschenverschlüssen, mit einagglomeriert werden und
5. nach der Trocknung des Mahlguts eine gezielte Siebfraktionierung durchgeführt wird.

Es ist bekannt, dass Beton und Estrichen Fasern (Stahl, Glas oder Kunststoff) zugemischt werden können, damit man definierte mechanische Eigenschaften für spezielle Anforderungen erreicht. Dieser Beton wird Faserbeton bzw. analog Faserestrich genannt. Beton und Estrich hatten eine geringe Biegezug- und Zugfestigkeit, Bruchdehnung und Schlagzähigkeit sowie eine große Rißneigung. Diese Eigenschaften können durch das Einmischen von Fasern verbessert werden. Die Fasern können Zugspannungen aufnehmen, die z.B. durch den Abfluß von Hydratationswärme oder Schwindprozesse oder äußere Lasteinwirkung entstehen. Durch die Fasern wird erreicht, dass sich nach Überschreiten der Zugfestigkeit des Betons oder des Estrichs nicht wenige große. Risse, sondern viele sehr feine Risse bilden, die durch die Fasern überbrückt werden.

Es kann eine Faserfraktion vorzugsweise im Größenbereich von 1,25 bis 3,15 mm verwendet werden, wobei die Fasern vorzugsweise einen hohen Anteil an LDPE, HDPE oder PP enthalten. Gleichzeitig kann durch Zugabe etwas körnigerer HDPE-Anteile die Duktilität des Betons bzw. Estrichs erhöht werden.

Beton findet im Hochbau vielfältige Anwendung. Es ist bekannt, dass mit Beton auch Anforderungen des Brandschutzes erfüllt werden können, wobei dem Beton dabei Grenzen gesetzt sind. Wegen der dichten Porenstruktur kann chemisch nicht gebundenes Wasser im Beton nicht schnell genug entweichen und es kommt zu Abplatzungen. Maßnahmen zu Verbesserung des Verhaltens im Brandschutz sind unter anderem die Bemessung der Bewehrung des Betons für den Brandfall oder die Zugabe von Stahlfasern, um Abplatzungen zu verhindern. Eine andere Möglichkeit ist es, dem Beton Kunststofffasern wie z.B. Textilfasern zuzugeben, die sich im Brandfall zersetzen bzw. schmelzen. Dies hinterläßt Kanäle, durch die das Wasser entweichen kann, ohne dass es zu Abplatzungen kommt.

Erfindungsgemäß läßt sich hierfür eine Fraktion aus gemahlenem Agglomerat aus Mischkunststoff einsetzen, das faserförmig ist und im Größenbereich von 1,25 bis 3,15 mm liegt. Als Kunststoff kommt vorwiegend HDPE und PP infrage. Der Anteil an LDPE-Fasern würde etwas früher schmelzen, als der Anteil an HDPE-Fasern, was bei den bei einem Brand vorherrschenden Temperaturen aber nicht ins Gewicht fällt.

Dämmstoffe aus Glas und Gestein finden eine breite Anwendung für Wärmedämmung, Brandschutz und für die Schalldämmung. Sie werden als Platten, Matten, Filzen, lose Schüttungen oder Schichtungen an Dächern, Decken, Wänden, Rohr- oder Lüftungsleitungen eingesetzt. Mineralwolle ist meist gelb, Steinwolle grau/grün.

Als Rohmaterial für die Herstellung verwendet man Glasrohstoffe, Altgläser, vulkanisches Gestein oder Kalkstein, wobei die Handelsbezeichnung die jeweilige Rohstoffbasis andeutet. Die Angaben der einzelnen Bestandteile weisen so weite chemischen Zusammensetzung häufig keine sichere Zuordnung zu einer bestimmten Faserart erfolgen kann. Mineralwollen werden mit Binde- und Schmelzmitteln versehen. Als Bindemittel wird Phenolharz eingesetzt. Diese Zusatzstoffe gewährleisten eine dauerhafte Wasserabweisung, wirken als Gleitmittel, verbessern die Griffigkeit, binden die Fasern in den Verband ein und verhindern das vorzeitige Brechen der Fasern. Das Faservlies durchläuft einen Durchströmungstrockner. Das Vlies wird über Siebbänder geführt, durch die heiße Luft (bei Mineralwolle ca. 150°C bis 200°C) durch das Vlies hindurch geblasen wird.

Erfindungsgemäß können bei der Produktion derartiger Dämmstoffe LDPE- und HDPE-Fasern eingesetzt werden, welche die oben beschriebene Bindefunktion im Dämmstoff übernehmen. Hierbei weisen die Kunststoff-Fasern eine Größe von etwa 1,25 bis 5,0 mm auf.

Holzfaserdämmstoffe finden Anwendung für Wärmedämmung, Brandschutz und für die Schalldämmung. Sie werden als Platten oder Rollenware eingesetzt. Eine weitere Anwendung ist eine Trittschalldämmmatte in geringer Dicke. Es ist bekannt, dass aerodynamische Vliesbildungsverfahren zur Dämmstoffproduktion mit Holzfasern verwendet werden können. Beim aerodynamischen Vliesbildungsverfahren werden die Holzfasern mit Hilfe eines Tamburs aufgekämmt und dreidimensional ausgerichtet. Das Vlies durchläuft unter Druck einen Durchströmungstrockner, wobei Kunststofffasern als Bindemittel eingesetzt werden. Häufig werden hierfür sogenannte BiKo-Fasern (Zwei-Komponentenfasern) verwendet.

Erfindungsgemäß kann als Bindemittelfaser hierfür eine Siebfraktion gewählt werden, die LDPE-Fasem, HDPE-Fasern und HDPE in körniger Form enthält. Die Größe der Fasern bewegt sich vorzugsweise zwischen 1,25 und 5,0 mm. Die Kunststofffasern dienen als Bindemittel, während die körnigen Bestandteile als Füllstoffe fungieren.

Es ist bekannt, dass dem Bindemittel und Abdichtungsmaterial "Bitumen" Polymere wie z.B. das Elastomer Styrol-Butadien-Styrol oder das Plastomer ataktisches Polypropylen zugemischt werden können. Bei dem entstehenden Elastomerbitumen können spezielle mechanische Eigenschaften wie z.B. verbesserte Wärmestandfestigkeit, gutes elastisches Verhalten bei niedrigen Temperaturen oder eine lange Lebensdauer erzielt werden. Die durch Plastomerzugabe entstehenden Plastomerbitumen zeichnen sich durch eine ausreichende Kälteflexibilität, einer ausgeprägten Witterungsbeständigkeit oder einem plastischen Verhalten aus.

Nach einer weiteren Ausgestaltung der Erfindung können als Zuschlag bei Asphalt Kunststoffpartikel gemahlenen Agglomerats im Größenbereich von 0,4 bis 5,0 mm eingesetzt werden. Hierfür werden vorzugsweise Fasern verwendet der Kunststoffsorten PP, LDPE und/oder HDPE.

Bei dem Verfahren nach der Erfindung kann eine Fraktion gewonnen werden, in der ein hoher Anteil an PP-Partikeln enthalten ist. Des Weiteren ist es möglich, durch Zugabe von aus agglomerierten Mischkunststoffen gewonnene Fraktionen mit einem hohen Anteil an PE-Partikeln einen Elastomerbitumen zu erzeugen. Gegebenenfalls ist es möglich, die Rohstoffe miteinander zu kombinieren, um die Eigenschaften beider Mischkunststoffe zu nutzen.

Es ist bekannt, dass Kunststoff als Reduktionsmittel bei der Stahlproduktion eingesetzt werden kann. Um Roheisen zu gewinnen, muß dem Ausgangsmaterial Eisenerz zunächst Sauerstoff entzogen werden. Dieses Verfahren wird als Reduktion Reduktionsmittel zum Einsatz: Aus den natürlichen Rohstoffen wird Synthesegas gewonnen, das im Hochofen für die notwendige chemische Reaktion sorgt.

Die Reduktion kann, wie bekannt, auch mit Kunststoffen durchgeführt werden. Per Druckluft wird das Agglomerat durch armdicke Schläuche zunächst in Silos gepumpt. Das Agglomerat gelangt dann direkt in die über 2.000 Grad Celsius heiße Hochofenschmelze. Bevor der Kunststoff brennen könnte, sorgen die extrem hohen Temperaturen dafür, dass er schlagartig in Synthesegas umgewandelt wird und seine Funktion als Reduktionsmittel erfüllen kann. Das Synthesegas entzieht beim Durchströmen des Ofens dem Eisenerz den Sauerstoff. Der Verwertungsprozeß im Stahlwerk besteht darin, dass aus Kunststoff nutzbares Gas erzeugt wird. Schweröl und Kohlenstaub, die sonst als Reduktionsmittel dienen, werden im Verhältnis eins zu eins ersetzt.

Erfindungsgemäß kann körniges bzw. staubförmig gemahlenes Agglomerat als Reduktionsmittel bei der Stahlproduktion eingesetzt werden. Durch die geringe Korngröße ist es möglich, die gleiche Technologie zu verwenden, wie beim Einblasen von Kohlenstaub. Bestehende Stahlwerke müssen daher nicht umgerüstet werden. Gegebenenfalls sind andere Düsen zu verwenden.

Zement wird aus natürlichen Rohstoffen hergestellt. Die wichtigsten Grundstoffe sind Kalkstein und Ton, die meist getrennt abgebaut und anschließend im geeigneten Verhältnis gemischt werden. Die Rohstoffgewinnung erfolgt im Steinbruch. Dort wird das Material entweder durch Sprengungen oder aber mit schweren Maschinen gelockert und anschließend in einer Brecheranlage zu Schotter zerkleinert. Der Rohschotter wird nach dem Transport ins Werk homogenisiert. Es werden außerdem benötigte Korrekturstoffe wie Sand, Löß oder Eisenoxid, hinzugemischt. Die Schritt gemeinsam sehr fein zu "Rohmehl" gemahlen. Das Gestein wird je nach Verfahren mit Stahlkugeln oder Stahlwalzen feingemahlen und von heißen Ofenabgasen getrocknet. Anschließend kann das Rohmehl zu Zementklinker gebrannt werden. Rücklaufender Staub aus dem Brennprozeß wird in Filtern abgeschieden und erneut in die Silos gegeben.

Der Brennvorgang erfolgt in Drehrohröfen, die mehrere Meter Durchmesser haben und 50 bis 200 Meter lang sind. Die Öfen sind im Inneren mit feuerfesten Steinen ausgekleidet und rotieren langsam um ihre Längsachse. Bedingt durch ein leichtes Gefälle wandert so das an einem Ende eingegebene Rohmehl langsam der Flamme am anderen Ende des Ofens entgegen. Dem Drehrohrofen vorgeschaltet ist ein sogenannter Zyklonvorwärmer. Das ist ein Wärmetauscher, der aus einem System mehrerer Zyklone - das sind Vorrichtungen zur Entstaubung von Gasen mit Hilfe der Fliehkraft - besteht. Hier wird das Rohmehl auf rund 800° C erhitzt. Am unteren Ende des Drehrohrofens - in der sogenannten Sinterzone - wird das Brenngut dann auf 1.400 bis 1.450° C erhitzt. Hier beginnt es teilweise zu schmelzen. Das Ergebnis ist ein chemisch umgewandeltes Brennprodukt - der Klinker. Dieser verläßt anschließend den Ofen und gelangt in den Kühler, bevor er weiter zum Lager geht. Die heiße Kühlerluft dient als Verbrennungsluft.

Im Zuge des energieintensiven Prozesses der Zementerzeugung kann Kunststoff verbrannt werden als Ersatz für Primärbrennstoffe (Kohle, Erdöl oder Gas). Die Zementindustrie ist aufgrund des hohen Energiebedarfes bei der Zementerzeugung besonders geneigt, den alternativen Brennstoff Kunststoff einzusetzen.

Es ist bekannt, Industrie- und Haushaltsabfälle wie Altöl, Tiermehl, getrockneten Klärschlamm oder Kunststoff (mit Ausnahme von PVC) als alternativen Brennstoff erreicht werden, liegen deutlich höher als diejenigen in den Verbrennungsanlagen. Sie sind deshalb besser für die Entsorgung von "Sondermüll" geeignet, sofern der Reinigung der entstehenden Abgase genügend Aufmerksamkeit geschenkt wird. Denn beim Verbrennungsprozeß können kritische Schadstoffe entstehen, die nicht zu unterschätzen sind. Zum Beispiel das vieldiskutierte Dioxin oder andere, heute noch unbekannte und deshalb nicht nachweisbare Stoffe. Ein Teil der anfallenden Schadstoffe bei der Zementherstellung werden durch chemische Prozesse im Produkt gebunden und gelangen somit nicht mit den Rauchgasen in die Umwelt. Aus heutiger Sicht ist dies ebenfalls ein Vorteil gegenüber der Entsorgung in Verbrennungsanlagen.

Erfindungsgemäß wird gemahlenes Agglomerat in verschiedenen Fraktionen, insbesondere im Größenbereich von 0,4 bis 5,0 mm eingesetzt. Eine kleinere Fraktion von z.B. < 0,16 mm kann analog wie Kohlenstaub eingeblasen werden. Der durch die Fraktionierung zur Verfügung stehende Brennstoff ist annähernd homogen, was einen homogenen thermischen Brennwert zur Folge hat und wodurch größere Schwankungen im Prozeß vermieden werden.

Im Wohnungsbau kommen z.B. bei der Verspachtelung von Gipskartonplatten trockene Gipsspachtel zum Anrühren mit Wasser oder pastöse Spachtel zum Einsatz. Diese können beispielhaft Gips, Kalkstein, Perlite, Kaolin, Glimmer oder Quarze enthalten. Stoffe wie Perlite sind teilweise sehr teuer. Nach der Erfindung kann eine feinste Fraktion an gemahlenem Agglomerat aus Mischkunststoffen als Füllstoff bei Spachteln verwendet werden und damit andere Stoffe substituieren. Im Hochbau kommt Leichtmörtel sowie Leichtputz ebenfalls verstärkt zur Anwendung. Als Zuschlagstoffe werden üblicherweise Glashohlkugeln oder Perlite verwendet, um ein Einfallen des Putzes beim Trocknungsprozeß zu verringern und die Agglomerat aus Mischkunststoffen eingesetzt werden, um die beschriebenen Zuschlagstoffe zu substituieren. Das gemahlene Agglomerat ist formbeständig, da es kein Wasser aufnimmt und bei dem Trocknungsprozeß demzufolge keinem Schwindprozeß unterliegt. Dadurch, dass das Material kein Wasser aufnimmt, muß im Vergleich zu üblichen Füllstoffen dem Putz weniger Wasser zugegeben werden. Die Kunststoffe weisen eine niedrigere Wärmeleitfähigkeit als ein üblicher Standardputz ohne Leichtzuschläge auf, sodass es ebenfalls zu einer wärmetechnischen Verbesserung des Putzes oder Mörtels kommt.

Die Fraktion für Spachtel sollte aus Staub der Größe < 0,04 mm bestehen, damit es beim Glattziehen mit einer Glättekelle nicht zu einer Riefenbildung in der Oberfläche des Spachtels kommt.

Die Kunststofffraktion für Leichtmörtel bzw. Leichtputze sollte körnig sein und möglichst wenig Fasern enthalten. Bei dem oben beschriebenen Beispiel wären dies die Kunststofffraktionen kleiner 1,25 mm.

Die Erfindung bezieht sich auch auf eine Dekontaminierung und/oder ein De-Inking von Mischkunststoffen aus der Abfallentsorgung, insbesondere für die oben angegebenen Anwendungsmöglichkeiten. Beim Einsatz als Brennstoff ist zumeist nicht schädlich, dass der Abfallkunststoff organische Bestandteile enthält und/oder Druckfarben, welche sich bei anderen Anwendungen unter Umständen schädlich bemerkbar machen. Erfindungsgemäß wird der Mahlprozeß für das Mischkunststoffagglomerat so durchgeführt, dass dabei im Wesentlichen alle Schadstoffe entfernt und auch die Druckfarben getrennt werden können. Vorzugsweise erfolgt dies in Mahlapparaturen wie Scheibenrefiner, wobei zusätzlich Wasser eingesetzt wird. Durch den Mahlprozeß wird organisches Material entfernt werden kann. Das Gleiche trifft für die Entfernung von Druckfarben zu (De-Inking). Der Dekontaminierungsprozeß und auch das De-Inking kann u.U, verbessert werden, wenn das Agglomerat vor dem Mahlprozeß gekocht wird. Das De-Inking erfolgt auch ohne Kochen des Agglomerates durch die Zugabe von großen Mengen Wasser oder Heißdampf während des Mahlprozesses. Ein weiterer Reinigungsschritt kann erfindungsgemäß darin bestehen, dass beim Trocknen des Mahlgutes Luft bzw. Wasserdampf hoher Temperatur im Kreislauf über das Mahlgut gelenkt wird, zur Entfernung restlicher schädlicher Bestandteile insbesondere gesundheitsschädlicher oder zumindest geruchsbelästigender organischer Stoffe. Es versteht sich, dass durch Zugabe chemikalischer Substanzen insbesondere der De-Inking-Prozeß verbessert werden kann. Durch die Dekontaminierung und das De-Inking ist die Anwendung des Mahlgutes für verschiedene Zwecke, z. B. als Zuschlagstoff für Spachtel und Mörtel, erst möglich.

Füllstoffe werden überall dort eingesetzt, wo empfindliche Güter beim Transport vor Beschädigungen geschützt werden müssen. Zum Einsatz kommen hier zum Beispiel Flakes aus Styropor, mit Luft gefüllte Kissen oder Kunststofffolien mit Lufteinschlüssen. Die Anforderung an solche Füllstoffe ist eine gewisse Zusammendrückbarkeit bei gleichzeitigem Rückstellungsvermögen. Stöße müssen abgepuffert werden können.

Bei der Erfindung kann eine Grobfraktion des Agglomerat-Mahlgutes von > 5,0 mm als Füllstoff eingesetzt werden. Derartige Flakes lassen sich aufgrund ihrer Größe und faserigen Struktur gut komprimieren und expandieren bei nachlassendem Druck wieder zur Ausgangsstruktur zurück. Auch diese Fraktion muß gegebenenfalls gereinigt und einem De-Inking-Prozeß unterzogen werden, wie er weiter oben beschrieben wurde. Hierzu kann überdies Agglomerat-Vlies auf einen zersetzen. Das so hergestellte Vlies kann vorverdichtet und mit seiner erhöhten Rohdichte zum Transport verwendet werden. Je nach Prozeßsteuerung und Gestaltung der Rohdichte des Vlieses kann es gerollt oder in Ballenform gebracht werden. Für die Weiterverarbeitung nach dem Transport können die Ballen - z.B. wie aus der Zellstoffindustrie oder bei der Herstellung von Textilfasern bekannt - mit Ballenöffnern bzw. Ballenrupfern wieder zerfasert werden.

Wie schon erwähnt, ist der Abstand der Mahlrippen bei den eingesetzten Refinern so groß zu wählen, dass es zu keinen Verstopfungen durch das zu vermahlene Gut kommt. Der Mahlspalt ist naturgemäß kleiner als der Durchmesser des zu vermahlenen Gutes. Gleichwohl kann geschehen, dass durch Faserbildung das Gut relativ ungemahlen durch den Refiner hindurchtritt. Um dies zu verhindern, können in realen Abständen Barrieren zwischen benachbarten Mahlrippen eingebaut werden, die dafür sorgen, dass das Mahlgut bei seiner radialen Wanderung in Richtung gegenüberliegender Mahlscheibe bewegt wird, damit eine Vermahlung auch solchen Materials erzielt wird. Die Barrieren können rampenartig gestaltet sein und auch eine gewisse radiale Länge haben, um die Wirksamkeit der Vermahlung zu erhöhen. Die Erfindung wird nachfolgend anhand eines in Zeichnungen dargestellten Ausführungsbeispiels näher erläutert.
- Fig. 1: zeigt schematisch eine erste Anlage zur Durchführung des erfindungsgemäßen Verfahrens,
- Fig. 2: zeigt eine Einzelheit der Anlage nach Fig. 1,
- Fig. 3: zeigt äußerst schematisch Draufsichten auf eine Scheibe und auf Scheibensegmente eines Scheibenrefiners,
- Fig. 4: zeigt eine andere Ausführungsform einer Anlage zur Durchführung des erfindungsgemäßen Verfahrens,
- Fign. 6 a bis d: zeigen abgewandelte Ausführungsformen der zweiten Mahlstufe nach Figur 4.

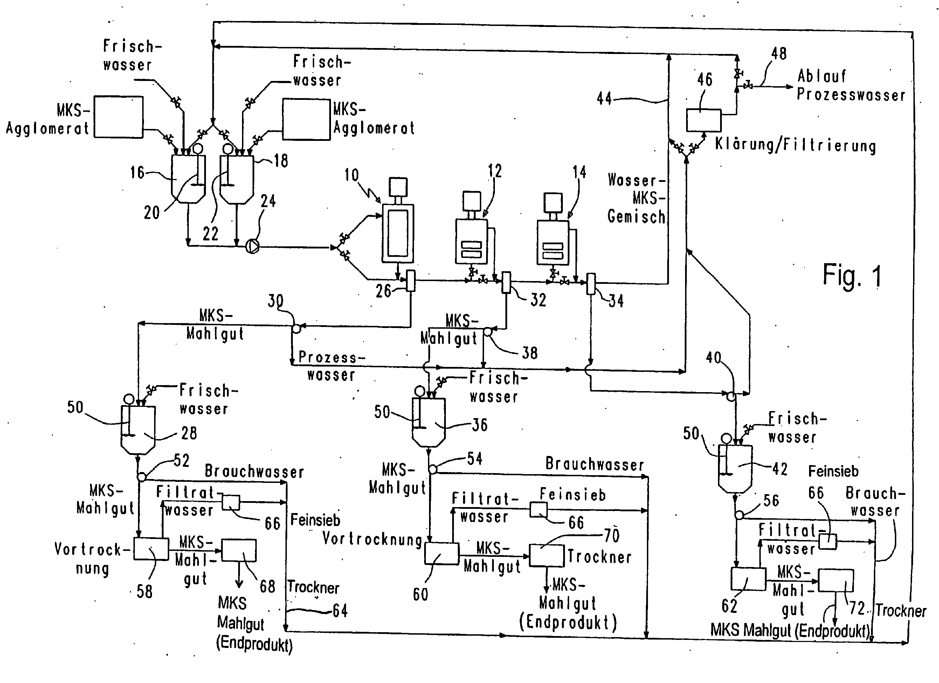

In Figur 1 sind ein Trommelrefiner 10 sowie zwei Scheibenrefiner 12, 14 in Serie angeordnet. Sie sind von einem geeigneten Antriebsmotor angetrieben. Sie dienen zum Zerkleinern von agglomeriertem Mischkunststoff (MKS-Agglomerat). Das Agglomerat wird zwei parallelen Behältern 16, 18 zugeführt, in welche auch Frischwasser eingetragen wird. Jedem Behälter 16, 18 ist ein Rührwerk 20 bzw. 22 zugeordnet. Es muß dafür gesorgt werden, dass das Agglomerat möglichst gleichmäßig im Wasservolumen verteilt ist. Das Verhältnis von Agglomerat zu Wasser beträgt z.B. 30:70. Die Mischung aus Agglomerat und Prozeßwasser wird über eine Pumpe 24 in die erste Refinerstufe 10 eingetragen. Das Mahlgut wird in einen ersten Sorter 26 eingetragen, mit dem feinere Bestandteile abgetrennt und in einen ersten Reinigungsbehälter 28 eingetragen werden kann, wobei zuvor mit Hilfe eines Bogensiebs 30 Prozeßwasser entzogen wird. Das übrige Mahlgut kann entweder durch weitere Sorter 32, 34 hindurchgehend in einen der Behälter 16, 18 zurückgeführt werden oder in die nächste Refinerstufe eingetragen werden, wobei das Mahlgut aus z. B. der Refinerstufe 12 im Sorter 32 getrennt wird, sodass wiederum feineres Gut in einen zweiten Reinigungsbehälter 36 gelangt, wobei Prozeßwasser wiederum über ein Bogensieb 38 entnommen wird. Wahlweise kann das gröbere Mahlgut über den Sorter 34 wiederum in den zugehörigen Behälter 16 bzw. 18 zurückgeführt werden oder in die dritte Refinerstufe 14 eingetragen werden, wonach das Mahlgut dann in den Sorter 34 gelangt und das wiederum feinere Mahlgut über ein drittes Bogensieb 40 in einen dritten Reinigungsbehälter 42 gelangt. Das Prozeßwasser, das über die Bogensiebe 30, 38 bzw. 40 entnommen wird, gelangt entweder über eine Leitung 44 unmittelbar in einen der Behälter 16,18 oder über eine Klärung 46 in diesen Behälter. Wahlweise kann auch ein Ablauf für Jedem Reinigungsbehälter 28, 36, 42 ist ein Rührwerk 50 zugeordnet. Den Reinigungsbehältern 28, 36, 42 wird Frischwasser zugeführt zwecks Reinigung des Mahlguts. Das Mahlgut aus den Reinigungsbehältern 28, 36, 42 gelangt jeweils über ein Bogensieb 52, 54 bzw. 56 in eine mechanische Vortrocknung (bevorzugt eine Schneckenpresse) 58 bzw. 60 bzw. 62. Brauchwasser wird im zugeordneten Bogensieb 52, 54, 56 abgezogen und über eine Leitung 64 in einen der Behälter 16, 18 zurückgeleitet. Optional kann dieses Brauchwasser anstelle von Frischwasser in die Reinigungsbehälter 28, 36 oder 42 zurückgeführt werden, bis ein definierter Verschmutzungsgrad erreicht ist. In der Feststoff-Flüssigkeit-Separierung 58 bis 62 erfolgt eine Vortrocknung des Mahlguts, sodass dieses nur noch 30 % Feuchtigkeit enthält. Das abgetrennte Wasser wird über ein Feinsieb 66 ebenfalls in die Leitung 64 eingetragen. Optional kann dieses Wasser auch in einer separaten Leitung geführt werden. Das vorgetrocknete Mahlgut wird in einem Trockner 68 bzw. 70 bzw. 72 endgetrocknet.

Wie erkennbar, kann mit Hilfe der beschriebenen Anlage eine gewünschte Mahlgutfraktion aus MKS-Agglomerat gewonnen und zugleich gereinigt und getrocknet erzeugt werden. Die Anzahl der Refinerstufen 10, 12, 14 und der Prozeßumläufe ist nach dem gewünschten Mahlguterzeugnis optimal einstellbar. Die einzusetzende Wassermenge ist bei Außerachtlassung von Verlusten nur so groß, wie bei der Endtrocknung verlorengeht. Wie schon erwähnt, hat das in der Vortrocknung getrocknete Mahlgut noch eine Feuchtigkeit von etwa 30 %. Diese Wassermenge muß durch Frischwasserzugabe in den Behältern 16, 18 bzw. den Reinigungsbehältern 2S, 36 und 42 ergänzt werden.

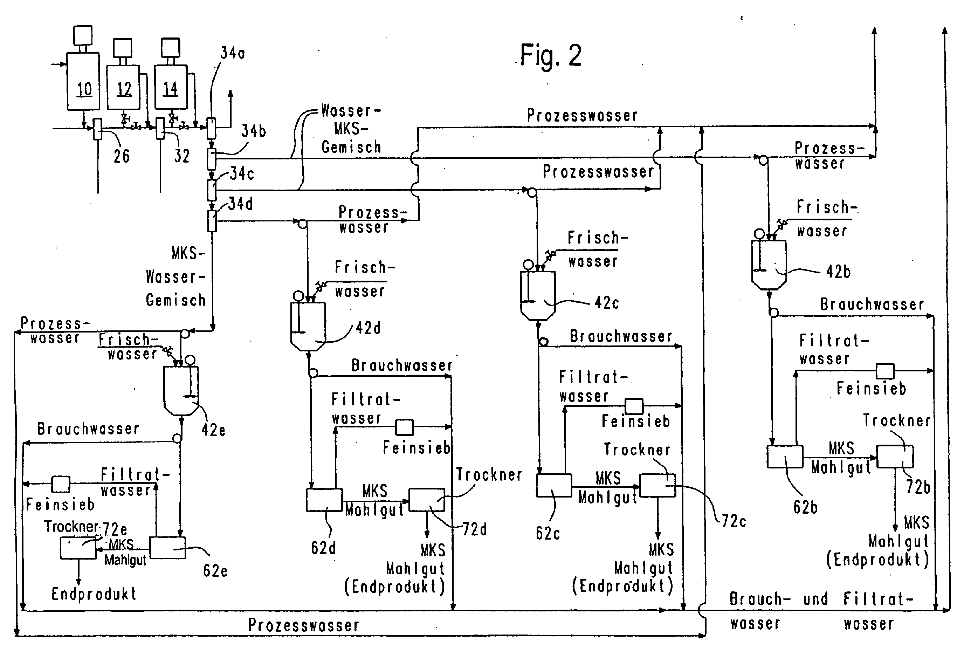

In Figur 2 sind teils gleiche Aggregate wie in Figur 1 dargestellt, sodass auf diese einer Vielzahl von Sortern 34a bis 34d bestehen kann, mit deren Hilfe einzelne Fraktionen abgetrennt und getrennten Reinigungsbehältern 42b, 42c, 42d und/oder 42e zugeführt werden kann. Ist nämlich ein Mahlprodukt von bestimmter Sieblinie gewünscht, dann versteht sich, dass nur diese Fraktion einer separaten Reinigung unterzogen werden kann. Diese Reihenschaltung von Sorten ist prinzipiell bei allen Sortern der beschriebenen Anlage möglich.

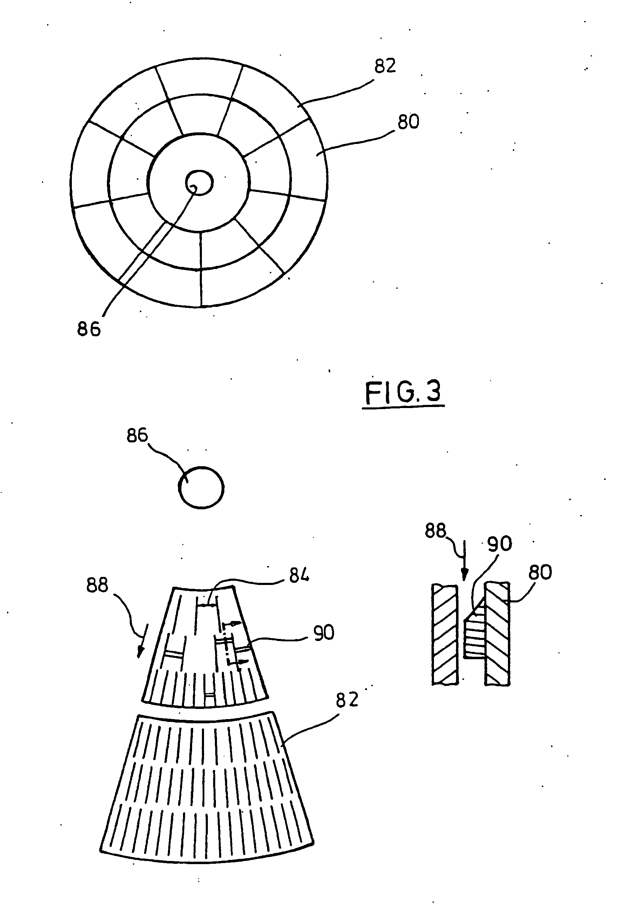

In Figur 3 ist oben sehr schematisch die Draufsicht auf eine Refinerscheibe 80 zu erkennen, die aus einzelnen Segmenten S2 zusammengesetzt ist, die auf einen Tragkörper aufgeschraubt werden. Die Segmente enthalten radiale Rillen oder Rippen, die auch je nach Anwendungsfall bogenförmig ausgestaltet werden können. Bei den Segmenten S2 in der unteren Darstellung ist eine radiale Ausrichtung der Rillen bzw. Rippen dargestellt. Für die Durchführung des beschriebenen Verfahrens ist wichtig, dass der Abstand der Rippen bzw. Rillen, der mit 84 bezeichnet ist, größer ist als der Durchmesser des Agglomerats. Dies gilt natürlich für den Rippenabstand bis zum radial äußeren Ende. Die Zuführung bei Scheibenrefinern ist bekanntlich in der Achse, wie bei 86 angegeben. Das Material wandert entsprechend Pfeil 88 radial nach außen und wird zwischen den Rippen bzw. Rillen der Statorscheibe und der rotierenden Scheibe zermahlen, z. B. mit einem Mahlspalt von 0,2 mm. Um zu verhindern, dass das Material - ohne zermahlen zu werden - durch die Rillen nach außen gelangt, können in die Rillen Stege 90 eingebaut werden, welche bewirken, dass das Material teilweise in Achsrichtung ausgelenkt wird in Richtung benachbarter Scheibe, um zu bewirken, dass das Agglomeratin jedem Fall wirksam zerkleinert wird, auch wenn es aus Folienmaterial gebildet wurde.

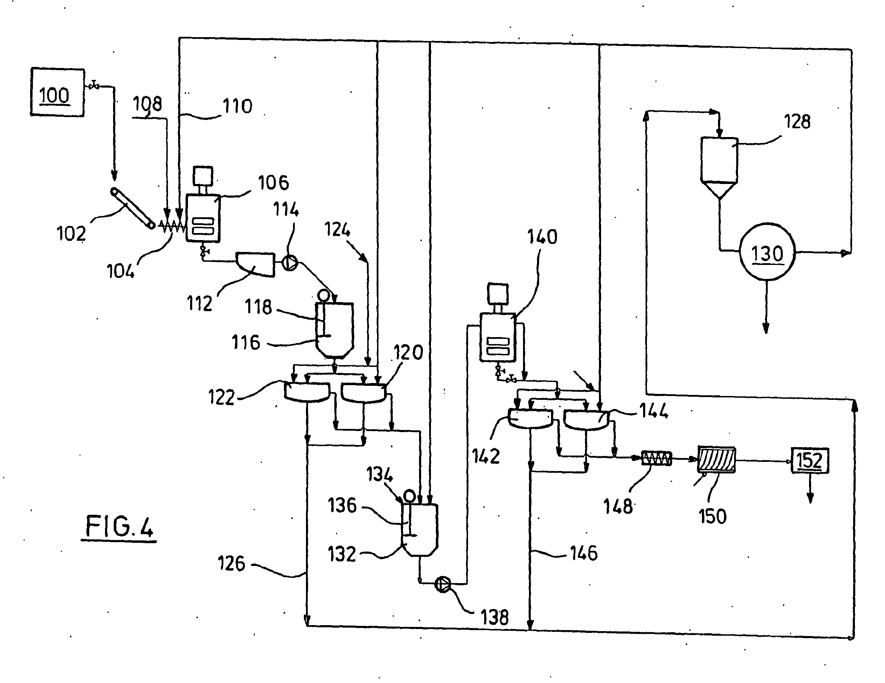

Bei der Ausführungsform nach Figur 4 gelangt Mischkunststoff-Agglomerat aus zu einem ersten Refiner 106. Dieser kann ein Single-Disc, Double-Disc, Twinflow-Refiner oder auch ein Trommelrefiner sein. Über 108 wird Frischwasser in die Transportschnecke eingeschleust und über 110 gereinigtes Prozeßwasser (darauf wird nachfolgend noch eingegangen). Es ist denkbar, von vornherein eine Suspension aus Agglomerat und Wasser in die Transportschnecke 104 einzugeben oder das Wasser dem Refiner anderweitig zuzuführen.

Über einen Pumpensumpf 112 transportiert eine Pumpe 114 das Mahlgut zu einem Behälter 116, in dem ein Rührwerk 118 angeordnet ist. Am Ausgang des Behälters 116 befinden sich zwei Siebanordnungen 120, 122, denen neben dem wässrigen Mahlgut gereinigtes Prozeßwasser bzw. Frischwasser bei 124 zugeführt wird. Die Sieböffnungen haben etwa 0,25 mm Weite, sodass körniges Mahlgut oberhalb dieser Größe aufgefangen wird, während eine Feinkornfraktion mit dem Prozeßwasser hindurchgeht und über eine Leitung 126 zu einem Schmutzwasserbehälter 128 gelangt und von dort zu einer Abwasserbehandlung 130. Es versteht sich, dass die sog. Feinkornfraktion, die mit dem Prozeßwasser abgeleitet wird, ihrerseits noch gefiltert oder gesiebt wird, um Feinanteile abzuscheiden, um sie wahlweise zu verwerten oder zu verwerfen.

Das übrige Mahlgut mit einer Korngröße > 0,25 mm gelangt in einen weiteren Behälter 132, dem gereinigtes Prozeßwasser bzw. über 134 Frischwasser zugeführt wird. Auch dieser Behälter enthält ein Rührwerk 136. Das im Behälter 132 gewaschene Mahlgut gelangt mit Hilfe einer Pumpe 138 zu einem zweiten Refiner 140. An den Ausgang des Refiners 140 sind zwei Siebanordnungen 142, 144 angeordnet, mit Sieböffnungen von etwa 0,25 mm, sodass wiederum eine Feinkornfraktion mit dem Prozeßwasser über 146 in die Prozeßwasserleitung 126 zur Abwasserbehandlung 130 gelangt. Das übrige Mahlgut wird über eine entfernt wird. Es kann ebenfalls zu Abwasserbehandlung geleitet werden, was jedoch nicht gezeigt ist. Das wasserarme Mahlgut wird in einem Trockner 152 getrocknet und von dort zu einem Silo gefördert. Das Mahlgut kann nach dem Trocknen in gewünschte Kornfraktionen getrennt werden, wofür geeignete Techniken zur Verfügung stehen.

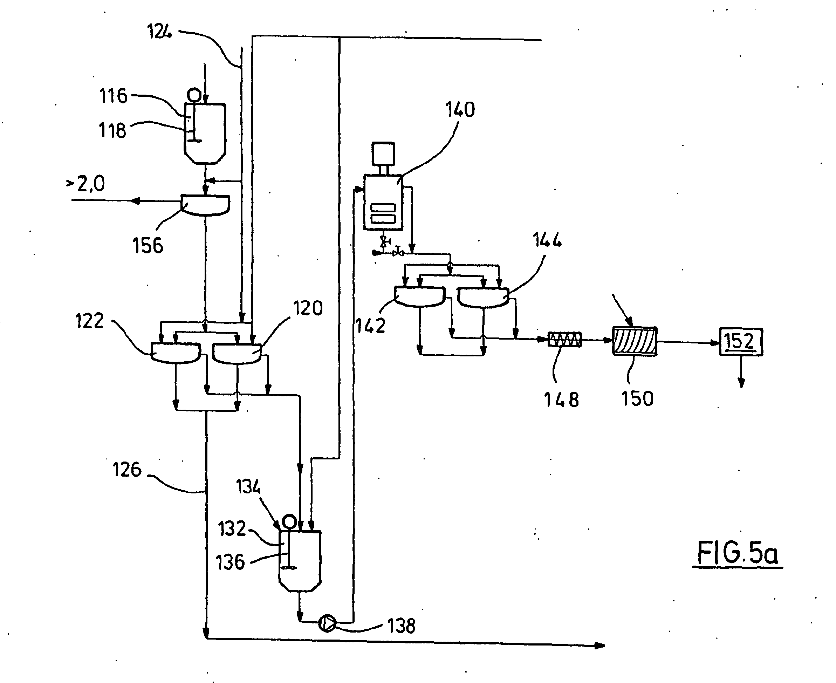

Bei der Ausführungsform nach Figur 5a sind diejenigen Anlagenteile, die gleich sind mit den Anlagenteilen nach Figur 4 mit gleichen Bezugszeichen versehen. Man erkennt, dass zwischen dem Behälter 116 und den Siebanordnungen 122, 120 eine Siebanordnung oder ein Sorter 156 angeordnet, mit dessen Hilfe ein sog. Überkorn > 2,0 mm entfernt wird, während mit dem Prozeßwasser das kleinere Korn in die Siebanordnungen 120, 122 eingetragen wird. Das Überkorn wird normalerweise verworfen oder dem Mahlprozeß der ersten Mahlstufe erneut zugeführt.

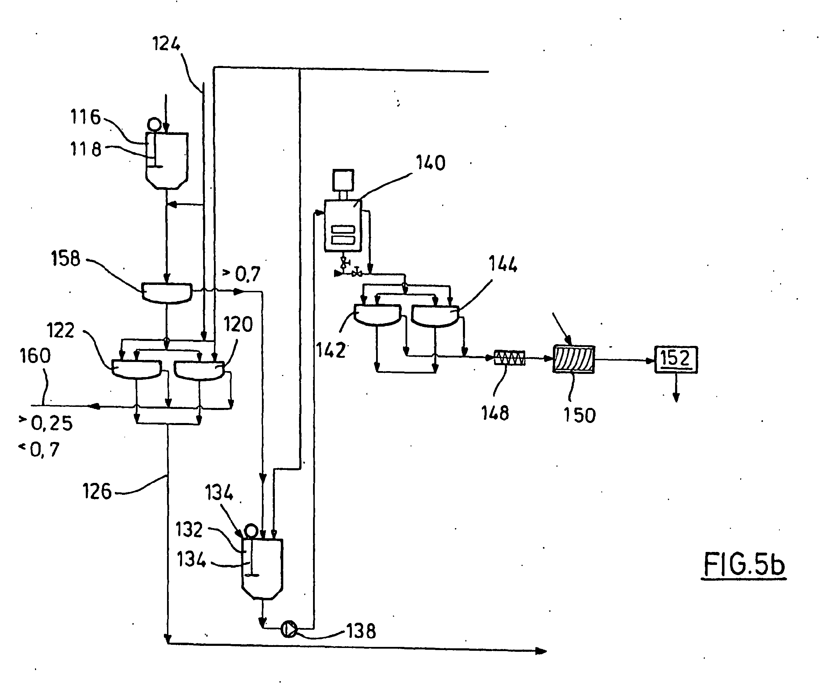

Bei der Ausführungsform nach Figur 5b ist ein Sorter oder eine Siebanordnung 158 zwischen dem Behälter 116 und den Siebanordnungen 122, 120 angeordnet, derart, dass Korn oberhalb von 0,7 mm entfernt und in den Behälter 132 geleitet wird, zwecks weiterer Aufmahlung im zweiten Refiner 140. Das Mahlgut kleiner Korngröße gelangt in die Siebanordnungen 120, 122, wobei das abgetrennte Mahlgut bei 160 abgeführt wird, das eine Korngröße hat kleiner als 0,7 und größer als 0,25. Dieses Mahlgut kann unmittelbar oder mit dem übrigen Mahlgut gemischt, entwässert und getrocknet und einer Verwendung zugeführt werden.

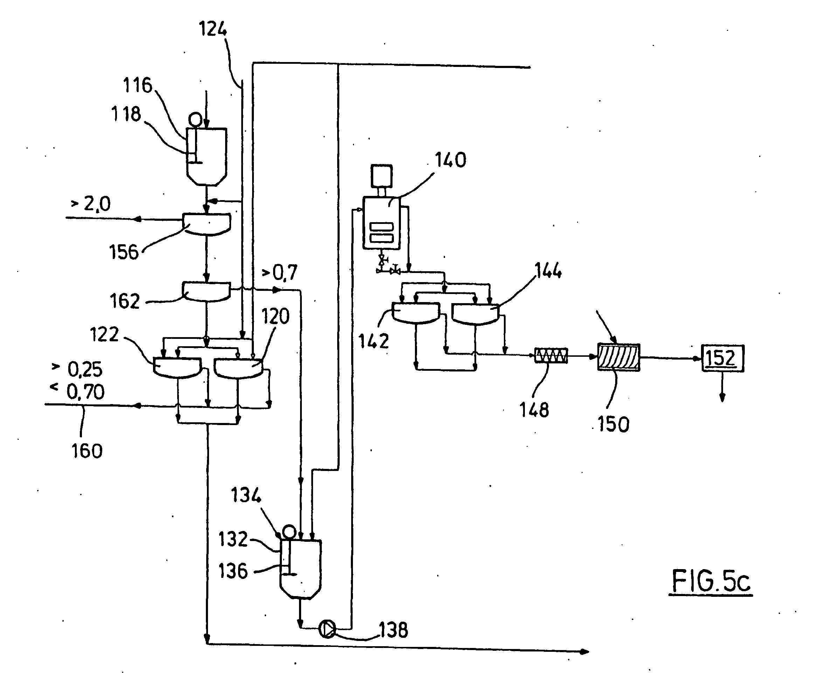

Bei der Ausführungsform nach Figur 5c ist dem Behälter 116 eine Siebanordnung oder ein Sorter 156 nachgeordnet, wie dies auch zu Figur 5a beschrieben ist. Diesem nachgeschaltet ist eine weitere Siebanordnung oder ein Sorter 160. Es ist eine Öffnungsweite vorgesehen, dass das Mahlgut mit einer Korngröße > 0,7 entfernt oder der Siebanordnung wird Überkorn > 2,0 mm entfernt, wie dies schon in Verbindung mit Figur 5b beschrieben wurde. Das Mahlgut, das von der Siebanordnung 162 zu den Siebanordnungen 120, 122 gelangt, wird dort vom Mahlgut mit einer Korngröße > 0,25 und < 0,7 mm getrennt.

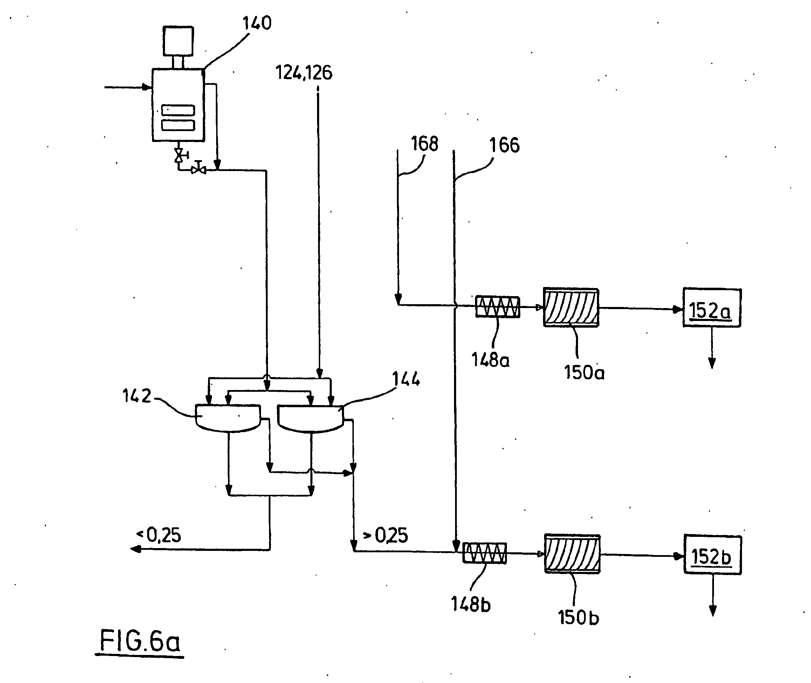

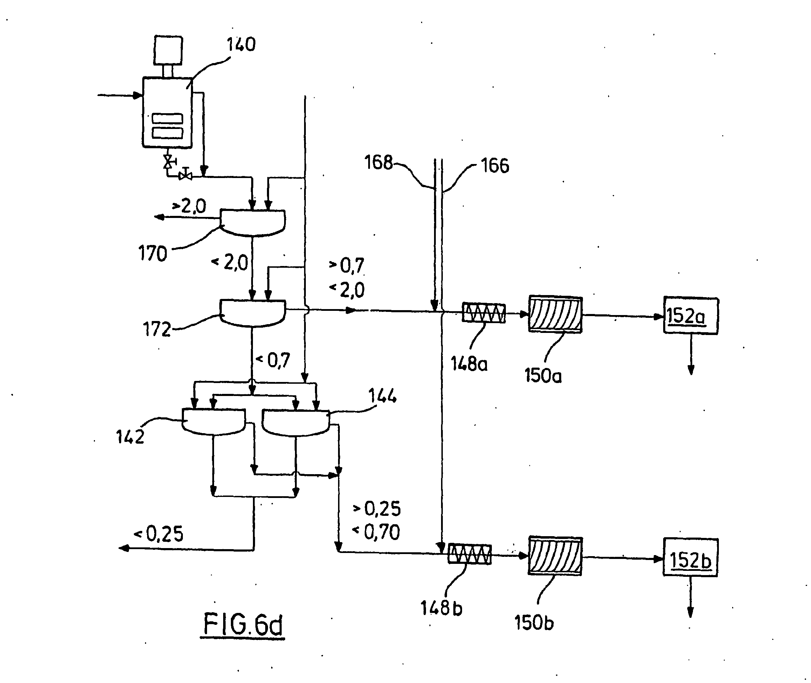

Bei der Ausführungsform nach den Figuren 6a bis 6d sind verschiedene Ausführungsformen der zweiten Mahlstufe nach der Ausführungsform nach Figur 4 gezeichnet. Soweit Übereinstimmung besteht mit Teilen nach Figur 4, werden gleiche Bezugszeichen verwendet.

In der Ausführungsform nach Figur 6a bis 6d sind zwei Stränge der mechanischen Entwässerung und der Trocknung, nämlich durch Zentrifuge 150a, 150b bzw. Trockner 152a bzw. 152b dargestellt. Eine Entwässerung erfolgt auch bereits durch die Transportschnecke 148a bzw. 148b.

In Figur 6a wird von dem Mahlgut des zweiten Refiners 140 wiederum die Feinkornfraktion entfernt, die mit dem Prozeßwasser abgeführt wird. Das übrige Mahlgut mit einer Korngröße von > 0,25 gelangt in den zweiten Trocknungsstrang 148b, 150b und 152b. Fraktionen des Mahlgutes aus der ersten Refinerstufe gemäß Figur 4 bzw. Figuren 5a bis c werden dem Mahlgut aus der zweiten Refinerstufe über Leitung 166 zugemischt. Das gleiche Mahlgut wird über 168 dem ersten Trocknungsstrang 148a, 150a und 152a zugeführt. Mithin werden zwei verschiedene Fraktionen des Mahlguts gewonnen, nämlich eine Fraktion im Korngrößenbereich zwischen > 0,25 und einem oberen Wert und einem Korngrößenbereich von z.B. 0,7 bis zu einem oberen Bereich.

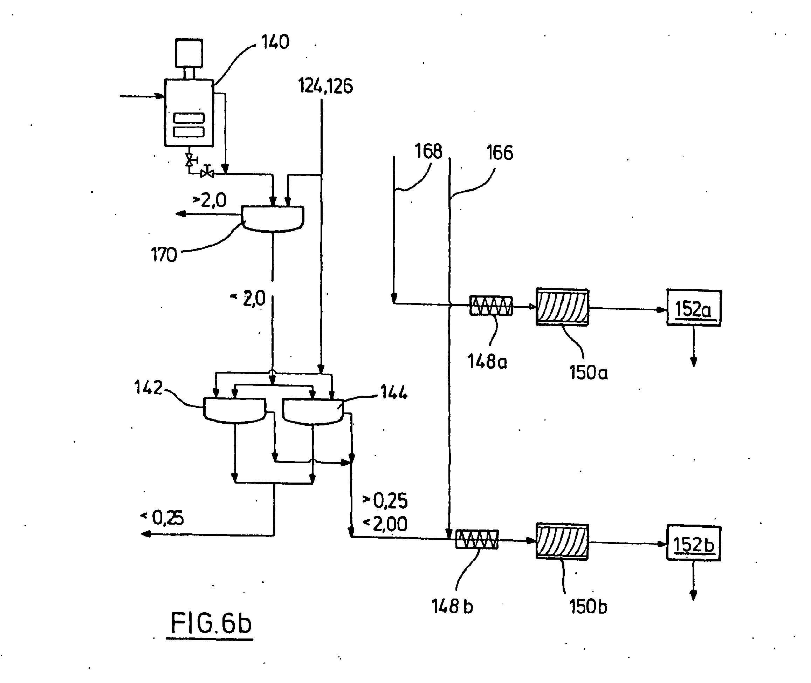

Bei der Ausführungsform nach Figur 6b ist zwischen der Siebanordnung 142, 144 sogenanntes Überkorn mit einer Korngröße > 2,0 abgeschieden wird, das z.B. verworfen wird. Mithin gelangt in den unteren Trocknungsstrang eine Kornfraktion von > 0,25 und < 2,00 mm. In den oberen Trocknungsstrang gelangt eine Fraktion wie zu Figur 6a beschrieben.

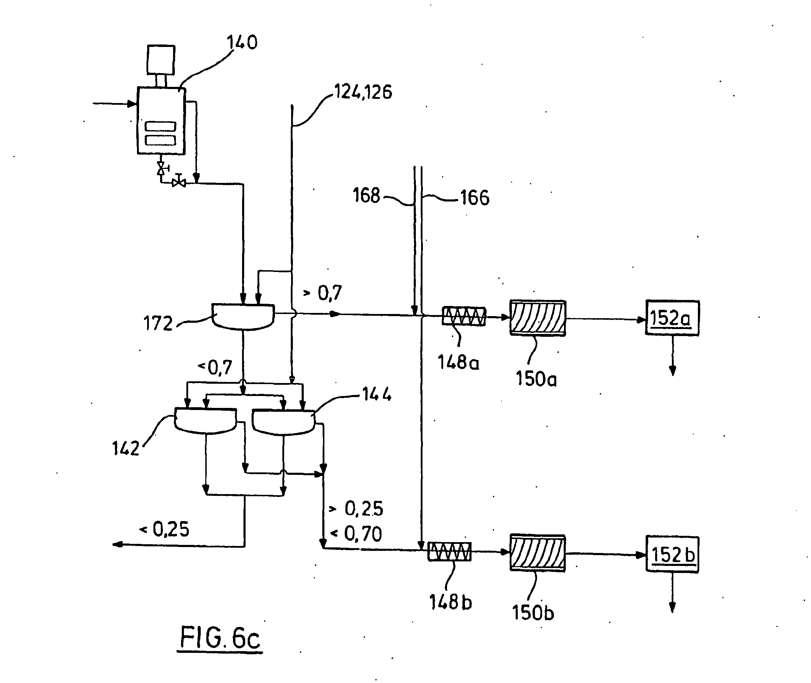

Bei der Ausführungsform nach Figur 6c ist eine Siebanordnung 172 zwischen dem zweiten Refiner 140 und der Siebanordnung 142, 144 angeordnet, bei der Korngrößen > 0,7 mm abgetrennt werden, während in den Siebanordnungen 142, 144 Feinanteile < 0,25 mm mit dem Prozeßwasser entfernt werden. Mithin gelangt in den oberen Trocknungsstrang Material mit Korngröße > 0,7 mm und in den unteren Trocknungsstrang Material mit einer Korngröße > 0,25 und < 0,7 mm. Auch hier werden daher zwei verschiedene Fraktionen gewonnen, denen über 166 bzw. 168 eine Kornfraktion aus der ersten Mahlstufe gemäß Figur 4 bzw. Figuren 5a bis 5c zugemischt wird.

Bei der Ausführungsform nach figur 6b sind beide Siebanordnungen 170 nach Figur 6b und 172 nach Figur 6c hintereinander dem ersten Refiner nachgeordnet. Mit der ersten Siebanordnung 170 wird das Überkorn > 2,0 mm entfernt und mit der zweiten Siebanordnung 172 ein Material mit der Korngröße < 2,0 mm und > 0,7 mm entfernt und in den oberen Trocknungsstrang geleitet. In die Siebanordnungen 142 und 144 gelangt das Mahlgut mit einer Korngröße > 0,7 mm, wobei - wie schon mehrfach beschrieben - der Feinkornanteil < 0,25 mm mit dem Prozeßwasser entfernt wird, während eine Kornfraktion > 0,25 und < 0,7 mm in den unteren Trocknungsstrang gelangt.

Insbesondere durch die Ausführungsform nach den Figuren 6a bis 6d ist aufgezeigt, wie bereits während des Mahlprozesses und eine geeignete Siebung im Anschluß sich, dass naturgemäß auch nach dem endgültigen Trocknen eine weitere Trennung einzelner Fraktionen vorgenommen werden kann.

Die Zugabe von Flakes aus reinem PP und/oder PF oder aus der Sortierung von Abfallkunststoff beim Kompaktieren bzw. Agglomerieren führt zu einer Verbesserung der Verarbeitungseigenschaften. Die Homogenisierung findet bei der Aufmahlung im wässrigen Medium statt. Es werden Produktvorteile erhalten, wie diese sonst nur durch nachträgliche Compoundierung des Mahlguts durch Zugabe von Reinkunststoffen erzielt werden können. Damit wird der Prozeß des Granulierens im Extruder eingespart, wobei das erfindungsgemäße Mahlgut gleichwohl zu Granulat oder Pellets aufgearbeitet werden kann. Bei der Erfindung brauchen abfallstämmige MKS mit durch Vorschädigung reduzierten Festigkeitseigenschaften nicht mehr nachträglich durch Compoundierung angereichert werden, weil dies bereits bei der Kompaktierung erfolgt. Der energie- und kostenintensive Granulierprozeß der Durchmischung und Homogenisierung wird umgangen.

Es versteht sich, dass auch andere Stoffe, wie Füllstoffe und Additive, sofern sie nicht wasserlöslich sind oder in feiner Pulverform vorliegen, bei der Kompaktierung zugesetzt werden können.

## Patentansprüche

1. Verfahren zur Zerkleinerung und Reinigung von Abfallkunststoff, insbesondere Mischkunststoff (MKS) mit den folgenden Schritten:
• aus Folienschnipseln oder zu Flakes zerkleinerten Folienresten und/oder zu Spänen zerhackten dickwandigen Kunststoffteilen wird ein Kompaktat, insbesondere ein Agglomerat, hergestellt,
• das Kompaktat wird in einem Scheiben- oder Trommelrefiner (10 - 14; 106, 140) eingetragen und darin in Anwesenheit von Wasser gemahlen, wobei der Anteil von Kompaktat des im Refiner befindlichen Gutes mindestens 10 Gewichtsprozent beträgt,
• von dem aus dem Refiner (10-14, 106, 140) austretenden Mahlgut wird eine Feinkornfraktion durch Trennung mit einem Sieb (30, 38, 120, 122-142, 144) oder Filter zusammen mit Prozeßwasser entfernt,
• das übrige Mahlgut wird gewaschen und entweder mechanisch entwässert • und getrocknet oder in einer weiteren Refinerstufe erneut in Anwesenheit von Wasser aufgemahlen und anschließend entwässert und getrocknet.

2. Verfahren nach Anspruch 1, **dadurch gekennzeichnet, dass** die Feinkornfraktion eine durchschnittliche Korngröße von max. 0,3 mm, vorzugsweise von maximal 0,25 mm aufweist.

3. Verfahren nach Anspruch 1 oder 2, **dadurch gekennzeichnet, dass** die Vermahlung in einem Refiner erfolgt, bei dem der Rippenabstand der Mahlscheiben (80) größer ist als die maximale Größe der Teilchen des Kompaktats und der Abstand der Mahlscheiben (80) kleiner ist als die maximale Größe der Teilchen des Kompaktats.

4. Verfahren nach Anspruch 3, **dadurch gekennzeichnet, dass** die Vermahlung in einem Refiner erfolgt, bei dem zwischen benachbarten Mahlrippen (82) der Mahlscheiben (80) Querabschnitte (90) angeordnet sind, die den Querschnitt zwischen benachbarten Mahlrippen (82) so verkleinern, dass die Teilchen zur benachbarten Refinerscheibe (80) abgelenkt werden.

5. Verfahren nach Anspruch 4, **dadurch gekennzeichnet, dass** die Querabschnitte (90) in Förderrichtung des Gutes rampenartig ansteigen.

6. Verfahren nach einem der Ansprüche 1 bis 5, **dadurch gekennzeichnet, dass** das Kompaktat mittels einer Förderschnecke (104) in den Refiner (156) eingetragen wird.

7. Verfahren nach Anspruch 6, **dadurch gekennzeichnet, dass** in die Förderschnecke (104) Wasser eingetragen wird.

8. Verfahren nach einem der Ansprüche 1 bis 5, **dadurch gekennzeichnet, dass** das Kompaktat und Wasser vor dem Vermahlen in einen Behälter (16, 18) gegeben und das Kompaktat gleichmäßig im Wasservolumen verteilt wird, wobei der Anteil des Kompaktats am Behälterinhalt mindestens 10 Gew.-% beträgt und Wasser mit verteiltem Agglomerat unter vorgegebenem Druck in den Refiner (10) eingetragen, wobei das aus dem Refineraustrag getrennte Wasser zumindest teilweise in den Behälter (16, 18) zurückgeführt werden kann.

9. Verfahren nach Anspruch 8, **dadurch gekennzeichnet, dass** die Mindestmenge an Wasser einem Volumen entspricht, das von einem vorgegebenen Kompaktat Volumen aufgenommen werden kann.

10. Verfahren nach Anspruch 1 bis 9, **dadurch gekennzeichnet, dass** das Mahlgut vor dem Entfernen der Feinkornfraktion mit dem Prozeßwasser ein- oder mehrfach im Kreislauf in den Refiner zurückgeleitet wird.

11. Verfahren nach einem der Ansprüche 1 bis 8, **dadurch gekennzeichnet, dass** das Brauchwasser aus den einzelnen Prozeßstufen nach dem Mahlvorgang in eine in Förderrichtung davor angeordnete Prozeßstufe zurückgeleitet wird.

12. Verfahren nach einem der Ansprüche 1 bis 11, **dadurch gekennzeichnet, dass** das übrige Mahlgut mit Wasser in ein Sink-Sichtgefäß eingetragen wird, zur Trennung einer polyolefinreicheren von einer polyolefinärmeren Fraktion.

13. Verfahren nach einem der Ansprüche 1 bis 12, **dadurch gekennzeichnet, dass** nicht temperiertes Frischwasser verwendet wird.

14. Verfahren nach einem der Ansprüche 1 bis 13, **dadurch gekennzeichnet, dass** das mit der Feinkornfraktion abgeschiedene Prozeßwasser oder das in weiteren Prozeßstufen anfallende Prozeßwasser geklärt wird.

15. Verfahren nach einem der Ansprüche 1 bis 14, **dadurch gekennzeichnet, dass** dem Mischkunststoff vor oder während des Kompaktierens Span- oder Fasergut beigemischt wird.

16. Verfahren nach einem der Ansprüche 1 bis 14, **dadurch gekennzeichnet, dass** dem Abfallkunststoff vor oder während des Kompaktierens bzw. Agglomierens reines oder durch Sortierung von Mischkunststoff gewonnenes PP und/oder PE zugemischt wird.

17. Verfahren nach einem der Ansprüche 1 bis 16, **dadurch gekennzeichnet, dass** das Mahlgut vor dem Trennen der Kornfraktionen in eine Bütte (28, 36, 42, 116, 132) eingetragen und darin agitiert wird.

18. Verfahren nach einem der Ansprüche 1 bis 17, **dadurch gekennzeichnet, dass** das übrige Mahlgut in einer Bütte (28, 36, 42, 116, 132) mit Frischwasser und/oder gereinigtem Prozeßwasser eingetragen wird.

19. Verfahren nach einem der Ansprüche 1 bis 18, **dadurch gekennzeichnet, dass** das übrige Mahlgut in einer weiteren Refinerstufe (140) in Anwesenheit von Wasser gemahlen und aus dem Mahlgut anschließend erneut eine Feinkornfraktion mit Prozeßwasser entfernt wird.

20. Verfahren nach Anspruch 19, **dadurch gekennzeichnet, dass** die weitere Feinkornfraktion eine durchschnittliche maximale Korngröße von maximal 0,3 mm, vorzugsweise von maximal 0,25 mm aufweist.

21. Verfahren nach einem der Ansprüche 1 bis 20, **dadurch gekennzeichnet, dass** in Prozeßrichtung nach der ersten und/oder zweiten Refinerstufe neben der Abtrennung der Feinkornfraktion eine Inline-Siebung des übrigen Mahlgutes vorgenommen wird, zur Trennung in unterschiedliche Kornfraktionen.

22. Verfahren nach Anspruch 21, **dadurch gekennzeichnet, dass** eine mittlere Fraktion aus der ersten Refinerstufe (106) mit einer Kornfraktion der zweiten Refinerstufe (140) gemischt und dass das Gemisch mechanisch entwässert und anschließend getrocknet wird.

23. Verfahren nach einem der Ansprüche 1 bis 22, **dadurch gekennzeichnet, dass** aus dem übrigen Mahlgut des Refiners (10-14; 106, 140) oder aus der Grobkornfraktion der In-line-Siebung eine Überkornfraktion entfernt wird, vorzugsweise in einer Korngröße von mindestens 2 mm.

24. Verfahren nach einem der Ansprüche 19 bis 23, **dadurch gekennzeichnet, dass** mit mindestens zwei Refinerstufen (10-14, 106, 140) gemahlen wird und die zweite Stufe (12, 14, 140) einen engeren Abstand der Mahlrippen (82) und/oder einen engeren Abstand der Mahlscheiben (80) (Mahlspalt) aufweist, wobei der Abstand der Mahlrippen (82) jeweils größer als das Korn des zu vennahlenden Gutes ist.

25. Verfahren nach Anspruch 21, **dadurch gekennzeichnet, dass** die einzelnen Kornfraktionen in einen Reinigungsbehälter (28, 36, 42, 132) mit Frischwasser geleitet werden.

26. Verfahren nach einem der Ansprüche 1 bis 19, **dadurch gekennzeichnet, dass** das gereinigte Mahlgut mechanisch unter Druck entwässert wird, bevorzugt mit Hilfe einer Schnecke (148).

27. Verfahren nach einem der Ansprüche 1 bis 26, **dadurch gekennzeichnet, dass** das gereinigte Mahlgut in einer Zentrifuge (150) entwässert wird.

28. Verfahren nach einem der Ansprüche 1 bis 27, **dadurch gekennzeichnet, dass** das Prozeßwasser gereinigt wird und dem Refiner (10, 12, 14, 106) und/oder einer Reinigungsstufe (46) zugeführt wird.

29. Verfahren nach einem der Ansprüche 1 bis 28, **dadurch gekennzeichnet, dass** aus mindestens einem getrockneten Mahlgut oder einer bei einer In-line-Siebung gewonnenen Fraktion mindestens zwei Kornfraktionen unterschiedlicher Sieblinie gewonnen werden.

30. Verfahren nach einem der Ansprüche 1 bis 29, **dadurch gekennzeichnet, dass** ein Anteil des Mahlgutes in einem vorgegebenen Korngrößenbereich als zweite Stoffkomponente mindestens einer ersten Stoffkomponente zugemischt und der Korngrößenbereich so gewählt wird, dass die physikalischen Eigenschaften der ersten Stoffkomponente verändert und/oder Anteile der ersten Stoffkomponente substituiert werden.

31. Verfahren nach Anspruch 30, **dadurch gekennzeichnet, dass** die erste Stoffkomponente Holzfasern für eine Holzfaserplatte (MDF, HDF) mittlerer oder hoher Dichte oder eine Holzspanplatte aufweist und die zweite Stoffkomponente als Bindemittel und/oder Holzersatz Faserform hat und im Korngrößenbereich < 0,63 mm liegt

32. Verfahren nach Anspruch 30 oder 31, **dadurch gekennzeichnet, dass** das Mahlgut nach Kunststoffsorten getrennt wird und die zweite Stoffkomponente vorwiegend aus LDPE, HDPE und/oder PET besteht.

33. Verfahren nach Anspruch 30, **dadurch gekennzeichnet, dass** die erste Stoffkomponente Holzspäne für eine Holzspanplatte (z.B. OSB) aufweist und die zweite Stoffkomponente als Holzersatz Kunststofffasern im Größenbereich von 1,25 bis 3,15 mm aufweist.

34. Verfahren nach Anspruch 30, **dadurch gekennzeichnet, dass** die zweite Stoffkomponente Faserform im Größenbereich von 1,25 bis 3,15 mm hat und als Zuschlagstoff für Beton, Brandschutzbeton oder Estrich verwendet wird.

35. Verfahren nach Anspruch 34, **dadurch gekennzeichnet, dass** der Zuschlagstoff für Beton und Estrich aus dem Mahlgut vorwiegend LDPE, HDPE, PP und/oder PET aufweist.

36. Verfahren nach Anspruch 30, **dadurch gekennzeichnet, dass** die zweite Stoffkomponente im Wesentlichen körnig ist und in der Größenordnung von 1,25 bis 3,15 mm vorliegt und als Zuschlagstoff für Beton oder Estrich verwendet wird.

37. Verfahren nach Anspruch 30, **dadurch gekennzeichnet, dass** aus dem Mahlgut vorwiegend HDPE und/oder PET und/oder PP verwendet wird.

38. Verfahren nach Anspruch 30, **dadurch gekennzeichnet, dass** aus dem Mahlgut vorwiegend HDPE und/oder PP als Zuschlag für Brandschutzbeton verwendet wird.

39. Verfahren nach Anspruch 30, **dadurch gekennzeichnet, dass** die erste Stoffkomponente Steinwoll- oder Mineralwollfasern aufweist und die zweite Stoffkomponente Faserform aufweist, im Größenbereich von 1,25 bis 5,0 mm.

40. Verfahren nach Anspruch 39, **dadurch gekennzeichnet, dass** das Mahlgut nach Kunststoffsorten getrennt und für die zweite Stoffkomponente vorwiegend LDPE und/oder PET verwendet wird.

41. Verfahren nach Anspruch 30, **dadurch gekennzeichnet, dass** die erste Stoffkomponente Holzfasern für Holzdämmstoffe aufweist und die zweite Stoffkomponente als Bindemittel Kunststofffasern im Größenbereich von vorwiegend 1,25 bis 5,0 mm aufweist.

42. Verfahren nach Anspruch 41, **dadurch gekennzeichnet, dass** das Mahlgut nach Kunststoffsorten getrennt und für die zweite Stoffkomponente LDPE und/oder HDPE verwendet wird.

43. Verfahren nach Anspruch 41, **dadurch gekennzeichnet, dass** die zweite Stoffkomponente als Füllstoff Kunststoffkömer verwendet, vorzugsweise aus HDPE und/oder PET.

44. Verfahren nach Anspruch 30, **dadurch gekennzeichnet, dass** die erste Stoffkomponente Asphalt aufweist und die zweite Stoffkomponente als Zuschlag Kunststoffpartikel im Größenbereich von 0,4 bis 5,0 mm enthält.

45. Verfahren nach Anspruch 44, **dadurch gekennzeichnet, dass** das Mahlgut nach Kunststoffsorten getrennt und für die zweite Stoffkomponente vorwiegend PP, LDPE und/oder HDPE verwendet wird.

46. Verfahren zur Bereitstellung eines Brenn- bzw. Reduktionsstoffes für Industrieöfen, mit einem Mahlgut nach Anspruch 1, **dadurch gekennzeichnet, dass** das körnige Mahlgut in der Größe von < 0,16 bis 5,0 mm separiert und in den Ofen eingeblasen wird.

47. Verfahren nach Anspruch 46, **gekennzeichnet durch** die Anwendung des Mahlguts als Reduktionsmittel bei der Eisenerzverhüttung im Korngrößenbereich < 0,4 mm.

48. Verfahren nach Anspruch 46, **gekennzeichnet durch** die Anwendung des Mahlguts als Brennstoff bei der Zementherstellung im Korngrößenbereich von 0,4 bis 5,0 mm

49. Verfahren nach einem der Ansprüche 1 bis 48, **dadurch gekennzeichnet, dass** LDPE- oder HDPE-Späne aus Kunststoff-Spritzgußteilen mit dem Mischkunststoff agglomeriert werden.

50. Verfahren nach einem der Ansprüche 40 bis 43, **dadurch gekennzeichnet, dass** Holzfasern mit den Kunststofffasern nach der aerodynamischen Vliesbildung zu einem Vlies gebildet werden und das Vlies in einem Durchströmtrockner getrocknet wird, wobei die Kunststofffasern als Bindemittel wirken, wobei die Temperatur der Strömung im Durchströmtrockner höher ist als die Schmelztemperatur der Kunststofffasern.

51. Anlage zur Zerkleinerung und Reinigung von kompaktiertem Kunststoff, in der mindestens ein Refiner (10-14, 106, 140) vorgesehen ist, dessen Einlaß entweder über eine Feststoffpumpe (138) und eine Leitung an einen Behälter für das Kompaktat und Wasser (16, 18) oder an dem Ausgang einer Förderschnecke (104) für das Kompaktat angeschlossen ist, **dadurch gekennzeichnet, daß** mit dem Ausgang des Refiners (10-14, 106, 140) eine Stoffabscheidevorrichtung (30, 38, 120, 122, 142, 144), bevorzugt ein Bogensieb, angeordnet ist zur Trennung des Mahlgutes vom Prozeßwasser und Entfernung einer Feinkornfraktion mit dem Prozeßwasser.

52. Anlage nach Anspruch 51, **dadurch** gekenntzeichnet, dass zwei oder mehr Refinerstufen (10-14) in Reihe geschaltet sind und die Rippenabstände der Mahlrippen (82) mit jeder Mahlstufe enger werden und/oder der Mahlspalt einer Stufe kleiner ist als bei der vorausgehenden Stufe, wobei der Mahlspalt jeweils kleiner als die Größe des Korns des zu vermahlenden Gutes ist.

53. Anlage nach Anspruch 51 bis 52, **dadurch gekennzeichnet, dass** die Rippen (82) an den Refinerscheiben (80) oder -trommeln einen Abstand voneinander haben, der größer ist als die maximale Größe der Teilchen des Kompaktats, bzw. des Korns des zu vermahlenden Gutes ist.

54. Anlage nach Anspruch 51 bis 53, **dadurch gekennzeichnet, dass** die Mahlrippen (82) aufeinander zu oder voneinander fort verstellbar an den Mahlscheiben angebracht sind.

55. Anlage nach Anspruch 53 oder 54, **dadurch gekennzeichnet, dass** die Mahlrippen radial oder bogenförmig ausgebildet sind.

56. Anlage nach Anspruch 51 bis 55, **dadurch gekennzeichnet, dass** am Ausgang der ersten und/oder zweiten Refinerstufe (106, 140) eine Sorter- oder Siebanordnung angeschlossen ist.

57. Anlage nach Anspruch 56, **dadurch gekennzeichnet, dass** für mehrere Siebe, Siebgruppen oder Sorter unterschiedliche Lochgrößen vorgesehen sind, mit in Strömungsrichtung kleiner werdenden Lochgrößen.

58. Anlage nach Anspruch 57, **dadurch gekennzeichnet, dass** die Löcher einen Durchmesser von 2,5 bis 0,2 mm haben.

59. Anlage nach Anspruch 56 oder 57, **dadurch gekennzeichnet, dass** die Siebanordnung ein Zylinderrohr mit gelochter Wandung aufweist, in deren Inneren ein Rotor mit Schaufeln dreh- und antreibbar ist, wobei die Schaufeln mit der Innenseite der Zylinderrohrwandung zusammenwirken.

## Claims

1. Method for comminuting and cleaning waste plastic, in particular mixed plastic (MLS) with the following steps:
• a compactate, in particular an agglomerate, is produced from film snips or film remainders milled to flakes and/or thick-walled plastic parts chopped to shavings,
• the compactate is inserted into a disk refiner or drum refiner (10-14; 106, 140) and is milled in the presence of water, wherein the share of compactate of the commodity located in the refiner is at least 10 percent by weight,
• a fine particle fraction is removed from the milled material discharged from the refiner (10-14, 106, 140) through separation with a sieve (30, 38, 120, 122-142, 144) or filter together with process water,
• the remaining milled material is washed and either mechanically dehydrated and dried or milled further in the presence of water in another refiner stage and then dehydrated and dried.

2. Method according to claim 1, **characterized in that** the fine particle fraction has an average particle size of max. 0.3 mm, preferably max. 0.25 mm.

3. Method according to claim 1 or 2, **characterized in that** the milling takes place in a refiner, in which the rib distance of the mill disks (80) is greater than the maximum size of the particles of the compactate and the distance of the mill disks (80) is less than the maximum size of the particles of the compactate.

4. Method according to claim 3, **characterized in that** the milling takes place in a refiner, in which transverse sections (90) are arranged between neighboring mill ribs (82) of the mill disks (80), which reduce the cross-section between neighboring mill ribs (82) such that the particles are deflected to the neighboring refiner disk (80).

5. Method according to claim 4, **characterized in that** the transverse sections (90) ascend in a ramp-like manner in the direction of conveyance of the commodity.

6. Method according to one of claims 1 through 5, **characterized in that** the compactate is added to the refiner (156) by means of a screw conveyor (104).

7. Method according to claim 6, **characterized in that** water is added to the screw conveyor (104).

8. Method according to one of claims 1 through 5, **characterized in that** the compactate and water are placed in a container (16, 18) before milling and the compactate is evenly distributed in the water volume, wherein the share of the compactate in the container content is at least 10 wt.% and water with the distributed agglomerate is added to the refiner (10) under specified pressure, wherein the water separated from the refiner discharge can be returned at least partially to the container (16, 18).

9. Method according to claim 8, **characterized in that** the minimum amount of water corresponds to a volume, which can be incorporated by a specified compactate volume.

10. Method according to claims 1 through 9, **characterized in that** the milled commodity is fed back in the circulation into the refiner one or more times before the removal of the fine particle fraction with the process water.

11. Method according to one of claims 1 through 8, **characterized in that** after the milling procedure the process water from the individual process steps is fed back to a process stage arranged before this in the direction of conveyance.

12. Method according to one of claims 1 through 11, **characterized in that** the remaining milled commodity with water is added to a sink separation tank for the separation of a more polyolefin-rich from a more polyolefin-poor fraction.

13. Method according to one of claims 1 through 12, **characterized in that** non-tempered fresh water is used.

14. Method according to one of claims 1 through 13, **characterized in that** the process water precipitated with the fine particle fraction or the process water accumulated in other process steps is cleaned.

15. Method according to one of claims 1 through 14, **characterized in that** a shaved or fiber commodity is added to the mixed plastic before or during the compacting.

16. Method according to one of claims 1 through 14, **characterized in that** pure PP and/or PE or PP and/or PE obtained through the sorting of mixed plastic is added to the waste plastic before or during compacting or agglomeration.

17. Method according to one of claims 1 through 16, **characterized in that** the milled commodity is added to a vat (28, 36, 42, 116, 132) before the separation of the particle fractions and is agitated therein.

18. Method according to one of claims 1 through 17, **characterized in that** the remaining milled commodity is added to a vat (28, 36, 42, 116, 132) with fresh water and/or cleaned process water.

19. Method according to one of claims 1 through 18, **characterized in that** the remaining milled commodity is milled in another refiner stage (140) in the presence of water and a fine particle fraction is then removed once again from the milled commodity with process water.

20. Method according to claim 19, **characterized in that** the further fine particle fraction has an average maximum particle size of max. 0.3 mm, preferably max. 0.25 mm.

21. Method according to one of claims 1 through 20, **characterized in that** an inline sieving of the remaining milled commodity is performed in the process direction after the first and/or second refiner stage in addition to the separation of the fine particle fraction for separation into different particle fractions.

22. Method according to claim 21, **characterized in that** a middle fraction from the first refiner stage (106) is mixed with a particle fraction from the second refiner stage (140) and **in that** the mixture is mechanically dehydrated and then dried.

23. Method according to one of claims 1 through 22, **characterized in that** an over-sized particle fraction is removed from the remaining milled commodity of the refiner (10-14; 106, 140) or from the coarse particle fraction of the inline sieving, preferably in a particle size of at least 2 mm.

24. Method according to one of claims 19 through 23, **characterized in that** milling is performed with at least two refiner stages (10-14, 106, 140) and the second stage (12, 14, 140) has a narrower separation distance of the mill ribs (82) and/or a narrower separation distance of the mill disks (80) (mill gap), wherein the separation distance of the mill ribs (82) is respectively greater than the particle size of the commodity to be milled.

25. Method according to claim 21, **characterized in that** the individual particle fractions can be fed into a cleaning container (28, 36, 42, 132) with fresh water.

26. Method according to one of claims 1 through 19, **characterized in that** the cleaned milled commodity is mechanically dehydrated under pressure, preferably with the help of a worm (148).

27. Method according to one of claims 1 through 26, **characterized in that** the cleaned milled commodity is dehydrated in a centrifuge (150).

28. Method according to one of claims 1 through 27, **characterized in that** the process water is cleaned and fed to the refiner (10, 12, 14, 106) and/or a cleaning stage (46).

29. Method according to one of claims 1 through 28, **characterized in that** at least two particle fractions with different sieve lines are obtained from at least one dried milled commodity or a fraction obtained in an inline sieving.

30. Method according to one of claims 1 through 29, **characterized in that** a share of the milled commodity in a specified particle size range is added as the second substance component to at least one first substance component and the particle size range is selected such that the physical properties of the first substance component are changed and/or portions of the first component are substituted.

31. Method according to claim 30, **characterized in that** the first substance component has wood fibers for a wood fiber plate (MDF, HDF) of a middle or high density or a particle board and the second substance component as binder and/or wood substitute has a fiber form and lies in the particle size range < 0.63 mm.

32. Method according to claim 30 or 31, **characterized in that** the milled commodity is separated by plastic types and the second substance component mainly consists of LDPE, HDPE and/or PET.

33. Method according to claim 30, **characterized in that** the first substance component has wood shavings for a particle board (e.g. OSB) and the second substance component as wood substitute has plastic fibers on the order of magnitude of 1.25 to 3.15 mm.

34. Method according to claim 30, **characterized in that** the second substance component has a fiber form on the order of magnitude of 1.25 to 3.15 mm and is used as an aggregate for concrete, fireproof concrete or screed.

35. Method according to claim 34, **characterized in that** the aggregate for concrete and screed from the milled commodity has mainly LDPE, HDPE, PP and/or PET.

36. Method according to claim 30, **characterized in that** the second substance component is mainly granular and is available on the order of magnitude of 1.25 to 3.15 mm and is used as an aggregate for concrete or screed.

37. Method according to claim 30, **characterized in that** mainly HDPE and/or PET and/or PP is used from the milled commodity.

38. Method according to claim 30, **characterized in that** mainly HDPE and/or PP is used from the milled commodity as the aggregate for fireproof concrete.

39. Method according to claim 30, **characterized in that** the first substance component has rock wool or mineral wool fibers and the second substance component has a fiber form, on the order of magnitude of 1.25 to 5.0 mm.

40. Method according to claim 39, **characterized in that** the milled commodity is separated by plastic types and mainly LDPE and/or PET is used for the second substance component.

41. Method according to claim 30, **characterized in that** the first substance component has wood fibers for wood insulating substances and the second substance component as binder has plastic fibers on the order of magnitude of mainly 1.25 to 5.0 mm.

42. Method according to claim 41, **characterized in that** the milled commodity is separated by plastic types and LDPE and/or HDPE is used for the second substance component.

43. Method according to claim 41, **characterized in that** the second substance component as filler uses plastic particles, preferably made of HDPE and/or PET.

44. Method according to claim 30, **characterized in that** the first substance component has asphalt and the second substance component as aggregate contains plastic particles on the order of magnitude of 0.4 to 5.0 mm.

45. Method according to claim 44, **characterized in that** the milled commodity is separated by plastic types and mainly PP, LDPE and/or HDPE is used for the second substance component.

46. Method for preparing a fuel or reduction substance for industrial furnaces, with a milled commodity according to claim 1, **characterized in that** the granular milled commodity ranging in size from 0.16 to 5.0 mm is separated and blown into the furnace.

47. Method according to claim 46, **characterized by** the use of the milled commodity as a reducing agent in iron-ore smelting in the particle size range < 0.4 mm.

48. Method according to claim 46, **characterized by** the use of the milled commodity as a fuel in cement production in the particle size range of 0.4 to 5.0 mm.

49. Method according to one of claims 1 through 48, **characterized in that** LDPE or HDPE shavings from plastic injection-molding parts are agglomerated with the mixed plastic.

50. Method according to one of claims 40 through 43, **characterized in that** wood fibers form a fleece material with the plastic fibers after the aerodynamic fleece formation and the fleece is dried in a flow-through drier, wherein the plastic fibers act as binders, wherein the temperature of the flow in the flow-through drier is higher than the melting temperature of the plastic fibers.

51. System for comminuting and cleaning compacted plastic, in which at least one refiner (10-14, 106, 140) is provided, the intake of which is either attached via a solids pump (138) and a line to a container for the compactate and water (16, 18) or to the outlet of a screw conveyor (104) for the compactate, **characterized in that** a substance separation device (30, 38, 120, 122, 142, 144), preferably a curved sieve, is arranged with the outlet of the refiner (10-14, 106, 140) for the separation of the milled commodity from the process water and removal of a fine particle fraction with the process water.

52. System according to claim 51, **characterized in that** two or more refiner stages (10-14) are series connected and the rib separation distances of the mill ribs (82) become more narrow with each mill stage and/or the mill gap of a stage is smaller than in the previous stage, wherein each of the mill gaps is smaller than the size of the particle of the commodity to be milled.

53. System according to claims 51 through 52, **characterized in that** the ribs (82) on the refiner disks (80) or drums have a separation distance that is greater than the maximum size of the particles of the compactate or of the particle of the commodity to be milled.

54. System according to claims 51 through 53, **characterized in that** the mill ribs (82) are arranged on the mill disks adjustably towards each other or away from each other.

55. System according to claims 53 or 54, **characterized in that** the mill ribs are designed radially or curved.

56. System according to claims 51 through 55, **characterized in that** a sorter or sieve arrangement is attached at the outlet of the first and/or second refiner stage (106, 140).

57. System according to claim 56, **characterized in that** different hole sizes are provided for several sieves, sieve groups or sorters, with the hole sizes becoming smaller in the direction of flow.

58. System according to claim 57, **characterized in that** the holes have a diameter of 2.5 to 0.2 mm.

59. System according to claims 56 or 57, **characterized in that** the sieve arrangement has a cylinder tube with a perforated wall, on the inside of which a rotor with shovels can be rotated and driven, wherein the shovels work together with the inside of the cylinder tube wall.

## Revendications

1. Procédé pour fragmenter et purifier des déchets de matière plastique, en particulier un mélange de matières plastiques comprenant les étapes suivantes :
• un compactat, en particulier un agglomérat, est produit à partir de bouts de feuilles ou de résidus de feuilles fragmentés en éclats et/ou de pièces en matière plastique à paroi épaisse hachées en copeaux,
• le compactat est alimenté dans un raffineur à disques ou à tambour (10-14 ; 106, 140) et y est broyé en la présence d'eau, la proportion en compactat de la matière se trouvant dans le raffineur étant d'au moins 10 pour cent en poids,
• une fraction à grain fin accompagnée d'eau de traitement est éliminée de la matière broyée sortant du raffineur (10-14, 106, 140) par séparation avec un tamis (30, 38, 120, 122-142, 144) ou un filtre,
• la matière broyée résiduelle est nettoyée et soit déshydratée et séchée mécaniquement, soit broyée de nouveau en la présence d'eau dans une nouvelle étape de raffinage puis déshydratée et séchée.

2. Procédé selon la revendication 1, **caractérisé en ce que** la fraction à grain fin présente une granulométrie moyenne de maximum 0,3 mm, de préférence de maximum 0,25 mm.

3. Procédé selon la revendication 1 ou 2, **caractérisé en ce que** le broyage est effectué dans un raffineur, dans lequel l'écartement des nervures des disques de broyage (80) est supérieur à la taille maximale des particules du compactat et l'écartement des disques de broyage (80) est inférieur à la taille maximale des particules du compactat.

4. Procédé selon la revendication 3, **caractérisé en ce que** le broyage est effectué dans un raffineur dans lequel, entre des nervures de broyage (82) avoisinantes des disques de broyage (80), sont disposées des portions transversales (90) qui réduisent la section transversale entre des nervures de broyage (82) avoisinantes de telle sorte que les particules sont déviées vers le disque de raffineur (80) avoisinant.

5. Procédé selon la revendication 4, **caractérisé en ce que** les portions transversales (90) augmentent telle une rampe dans la direction d'acheminement de la matière.

6. Procédé selon l'une des revendications 1 à 5, **caractérisé en ce que** le compactat est alimenté dans le raffineur (156) au moyen d'un transporteur à vis sans fin (104).

7. Procédé selon la revendication 6, **caractérisé en ce que** de l'eau est alimentée dans le transporteur à vis sans fin (104).

8. Procédé selon l'une des revendications 1 à 5, **caractérisé en ce que** le compactat et de l'eau sont introduits avant le broyage dans un réservoir (16, 18) et le compactat est dispersé de manière homogène dans le volume d'eau, la proportion en compactat du contenu du réservoir étant d'au moins 10 % en poids et de l'eau avec l'agglomérat dispersé peut être alimentée sous pression prédéterminée dans le raffineur (10), l'eau séparée de la décharge du raffineur pouvant être reconduite au moins partiellement dans le réservoir (16, 18).

9. Procédé selon la revendication 8, **caractérisé en ce que** la quantité minimale en eau correspond à un volume qui peut être absorbé par un volume de compactat prédéterminé.

10. Procédé selon les revendications 1 à 9, **caractérisé en ce que** la matière broyée est redirigée dans le raffineur avec l'eau de traitement une ou plusieurs fois en circuit avant l'élimination de la fraction à grain fin.

11. Procédé selon l'une des revendications 1 à 8, **caractérisé en ce que** l'eau industrielle issue des étapes individuelles du processus est redirigée après le processus de broyage dans une étape du processus disposée en amont dans le sens d'alimentation.

12. Procédé selon l'une des revendications 1 à 11, **caractérisé en ce que** la matière broyée résiduelle est alimentée avec de l'eau dans un récipient de séparation par sédimentation pour séparer une fraction plus riche en polyoléfine d'une fraction plus pauvre en polyoléfine.

13. Procédé selon l'une des revendications 1 à 12, **caractérisé en ce que** de l'eau d'appoint non tempérée est utilisée.

14. Procédé selon l'une des revendications 1 à 13, **caractérisé en ce que** l'eau de traitement extraite avec la fraction à grain fin ou l'eau de traitement produite dans d'autres étapes de processus est clarifiée.

15. Procédé selon l'une des revendications 1 à 14, **caractérisé en ce que** de la matière en copeaux ou fibreuse est ajoutée au mélange de matières plastiques avant ou pendant le compactage.

16. Procédé selon l'une des revendications 1 à 14, **caractérisé en ce que** du PP et/ou PE pur ou récupéré du triage de mélanges de matières plastiques est ajouté aux déchets de matière plastique avant ou pendant le compactage et/ou l'agglomération.

17. Procédé selon l'une des revendications 1 à 16, **caractérisé en ce que** la matière broyée est alimentée dans une cuve (28, 36, 42, 116, 132) avant la séparation des fractions granulométriques et y est agitée.

18. Procédé selon l'une des revendications 1 à 17, **caractérisé en ce que** la matière broyée résiduelle est alimentée dans une cuve (28, 36, 42, 116, 132) avec de l'eau d'appoint et/ou de l'eau de traitement purifiée.

19. Procédé selon l'une des revendications 1 à 18, **caractérisé en ce que** la matière broyée résiduelle est broyée dans une nouvelle étape de raffinage (140) en la présence d'eau et une fraction à grain fin est ensuite éliminée de nouveau de la matière broyée avec de l'eau de traitement.

20. Procédé selon la revendication 19, **caractérisé en ce que** la nouvelle fraction à grain fin présente une granulométrie moyenne maximale de maximum 0,3 mm, de préférence de maximum 0,25 mm.

21. Procédé selon l'une des revendications 1 à 20, **caractérisé en ce que** dans le sens de processus après la première et/ou seconde étape de raffinage, un tamisage en ligne de la matière broyée résiduelle est effectué en plus de la séparation de la fraction à grain fin, pour une séparation en fractions granulométriques différentes.

22. Procédé selon la revendication 21, **caractérisé en ce qu'**une fraction médiane de la première étape de raffinage (106) est mélangée à une fraction granulométrique de la seconde étape de raffinage (140) et que le mélange est déshydraté puis séché mécaniquement.

23. Procédé selon l'une des revendications 1 à 22, **caractérisé en ce qu'**à partir de la matière broyée résiduelle du raffineur (10-14 ; 106, 140) ou à partir de la fraction à grain grossier du tamisage en ligne, une fraction de grains déclassés supérieurs est éliminée, de préférence avec une granulométrie d'au moins 2 mm.

24. Procédé selon l'une des revendications 19 à 23, **caractérisé en ce que** l'on broie avec au moins deux étapes de raffinage (10-14, 106, 140) et **en ce que** la seconde étape (12, 14, 140) présente un écartement plus étroit des nervures de broyage (82) et/ou un écartement plus étroit des disques de broyage (80) (fente de broyage), l'écartement des nervures de broyage (82) étant respectivement supérieur au grain de la matière à broyer.

25. Procédé selon la revendication 21, **caractérisé en ce que** les fractions granulométriques individuelles sont dirigées dans un réservoir de purification (28, 36, 42, 132) avec de l'eau d'appoint.

26. Procédé selon l'une des revendications 1 à 19, **caractérisé en ce que** la matière de broyage purifiée est déshydratée mécaniquement sous pression, de préférence à l'aide d'une vis sans fin (148).

27. Procédé selon l'une des revendications 1 à 26, **caractérisé en ce que** la matière broyée purifiée est déshydratée dans une centrifuge (150).

28. Procédé selon l'une des revendications 1 à 27, **caractérisé en ce que** l'eau de traitement est purifiée et alimentée dans le raffineur (10, 12, 14, 106) et/ou dans une étape de purification (46).

29. Procédé selon l'une des revendications 1 à 28, **caractérisé en ce qu'**à partir d'au moins une matière broyée sèche ou d'une fraction récupérée lors d'un tamisage en ligne, on récupère au moins deux fractions granulométriques de courbes de tamisage différentes.

30. Procédé selon l'une des revendications 1 à 29, **caractérisé en ce qu'**une partie de la matière broyée dans une plage granulométrique prédéterminée est ajoutée en tant que second composant de matière à un premier composant de matière et la plage granulométrique est choisie de sorte que les propriétés physiques du premier composant de matière sont modifiées et/ou des parties du premier composant de matière sont substituées.

31. Procédé selon la revendication 30, **caractérisé en ce que** le premier composant de matière présente des fibres ligneuses pour un panneau de fibres de bois à moyenne densité ou à haute densité (MDF, HDF) et le second composant de matière en tant que liant et/ou succédané de bois a la forme de fibres et se trouve dans la plage granulométrique 0,63 mm.

32. Procédé selon la revendication 30 ou 31, **caractérisé en ce que** la matière broyée est triée par types de matière plastique et le second composant de matière est composé en majorité de PEBD, PEHD et/ou PET.

33. Procédé selon la revendication 30, **caractérisé en ce que** le premier composant de matière présente des copeaux de bois pour un panneau de particules (par exemple panneau OSB) et le second composant de matière en tant que succédané de bois présente des fibres de matière plastique dans la plage de grandeur allant de 1,25 à 3,15 mm.

34. Procédé selon la revendication 30, **caractérisé en ce que** le second composant de matière a une forme fibreuse dans la plage de grandeur allant de 1,25 à 3,15 mm et est utilisé en tant qu'agrégat pour béton, béton coupe-feu ou chape.

35. Procédé selon la revendication 34, **caractérisé en ce que** l'agrégat pour béton et chape à partir de la matière broyée présente en majorité du PEBD, PEHD, PP et/ou PET.

36. Procédé selon la revendication 30, **caractérisé en ce que** le second composant de matière est en majorité granuleux et présente un ordre de grandeur allant de 1,25 à 3,15 5 mm et est utilisé en tant qu'agrégat pour béton ou chape.

37. Procédé selon la revendication 30, **caractérisé en ce que** l'on utilise à partir de la matière broyée en majorité du PEHD et/ou PET et/ou PP.

38. Procédé selon la revendication 30, **caractérisé en ce que** l'on utilise à partir de la matière broyée en majorité du PEHD et/ou PP en tant qu'agrégat pour béton coupe-feu.

39. Procédé selon la revendication 30, **caractérisé en ce que** le premier composant de matière présente des fibres de laine de roche ou de laine minérale et le second composant de matière présente une forme fibreuse, dans la plage de grandeur allant de 1,25 à 5,0 mm.

40. Procédé selon la revendication 39, **caractérisé en ce que** la matière broyée est triée par types de matière plastique et que pour le second composant de matière on utilise en majorité du PEBD et/ou PET.

41. Procédé selon la revendication 30, **caractérisé en ce que** le premier composant de matière présente des fibres ligneuses pour les matériaux isolants à base de bois et le second composant de matière en tant que liant présente des fibres de matière plastique dans la plage de grandeur allant en majorité de 1,25 à 5,0 mm.

42. Procédé selon la revendication 41, **caractérisé en ce que** la matière broyée est triée par types de matière plastique et que l'on utilise pour le second composant de matière du PEBD et/ou PEHD.

43. Procédé selon la revendication 41, **caractérisé en ce que** le second composant de matière en tant que matière de remplissage utilise des grains de matière plastique, de préférence en PEHD et/ou PET.

44. Procédé selon la revendication 30, **caractérisé en ce que** le premier composant de matière présente de l'asphalte et le second composant de matière en tant qu'agrégat comprend des particules de matière plastique dans la plage de grandeur allant de 0,4 à 5,0 mm.

45. Procédé selon la revendication 44, **caractérisé en ce que** la matière broyée est triée par types de matière plastique et que l'on utilise pour le second composant de matière en majorité du PP, PEBD et/ou PEHD.

46. Procédé pour fournir un combustible et/ou une substance de réduction pour les fours industriels, avec une matière broyée selon la revendication 1, **caractérisé en ce que** la matière broyée granuleuse dans la grandeur allant de < 0,16 à 5,0 mm est séparée et est insufflée dans le four.

47. Procédé selon la revendication 46, **caractérisé par** l'application de la matière broyée en tant que moyen de réduction dans le traitement métallurgique dans la plage granulométrique < 0,4 mm.

48. Procédé selon la revendication 46, **caractérisé par** l'application de la matière broyée en tant que combustible dans la fabrication du ciment dans la plage granulométrique allant de 0,4 à 5,0 mm.

49. Procédé selon l'une des revendications 1 à 48, **caractérisé en ce que** des copeaux de PEBD ou PEHD de pièces en matière plastique moulées par injection sont agglomérés avec le mélange de matières plastiques.

50. Procédé selon l'une des revendications 40 à 43, **caractérisé en ce que** des fibres ligneuses sont formées avec les fibres de matière plastique en un voile après la formation aérodynamique de voile et le voile est séché dans un séchoir circulaire, les fibres de matière plastique agissant comme liant, la température du flux dans le séchoir circulaire à bobine étant supérieure à la température de fusion des fibres de matière plastique.

51. Installation pour fragmenter et purifier de la matière plastique compactée, dans laquelle au moins un raffineur (10-14, 106, 140) est prévu dont l'arrivée est raccordée soit par une pompe à matières solides (138) et une conduite à un réservoir pour le compactat et l'eau (16, 18), soit à la sortie d'un transporteur à vis sans fin (104) pour le compactat, **caractérisée en ce qu'**avec la sortie du raffineur (10-14, 106, 140), est disposé un dispositif de séparation de matière (30, 38, 120, 122, 142, 144), de préférence un tamis courbé, pour séparer la matière de broyage de l'eau de traitement et éliminer une fraction à grain fin avec l'eau de traitement.

52. Installation selon la revendication 51, **caractérisée en ce que** deux ou plusieurs étapes de raffinage (10-14) sont branchées en série et les écartements de nervures des nervures de broyage (82) deviennent plus étroits à chaque étape de broyage et/ou la fente de broyage d'une étape est inférieure à celle de l'étape précédente, la fente de broyage étant respectivement inférieure à la grosseur du grain de la matière à broyer.

53. Installation selon les revendications 51 à 52, **caractérisée en ce que** les nervures (82) sur les disques (80) ou tambours de raffineur présentent un écartement les unes par rapport aux autres qui est supérieur à la grosseur maximale des particules du compactat, et/ou du grain de la matière à broyer.

54. Installation selon la revendication 51 à 53, **caractérisée en ce que** les nervures de broyage (82) sont attachées aux disques de broyage de manière ajustable les unes vers les autres ou les unes à l'écart des autres.

55. Installation selon la revendication 53 ou 54, **caractérisée en ce que** les nervures de broyage sont formées radialement ou de manière arquée.

56. Installation selon la revendication 51 à 55, **caractérisée en ce qu'**à la sortie de la première et/ou de la seconde étape de raffinage (106, 140) est raccordé un arrangement de trieuse ou de tamisage.

57. Installation selon la revendication 56, **caractérisée en ce que** pour plusieurs tamis, groupes de tamisage ou trieuses, des tailles de trou différentes sont prévues, avec des tailles de trou devenant de plus en plus petites dans le sens du flux.

58. Installation selon la revendication 57, **caractérisée en ce que** les trous ont un diamètre allant de 2,5 à 0,2 mm.

59. Installation selon la revendication 56 ou 57, **caractérisée en ce que** l'arrangement de tamisage présente un tube cylindrique à paroi trouée, à l'intérieur de laquelle un rotor avec des pales peut être tourné et entraîné, les pales coopérant avec le côté intérieur de la paroi de tube cylindrique.
